# EUROPEAN PATENT APPLICATION

(11) **EP 2 704 346 A2**
(43) Date of publication of application: **05.03.2014**
(21) Application number: 13173543.3
(22) Date of filing: 25.06.2013
(51) Int. Cl.: H04L 1/18

(54) **Data transmission device and data transmission method**

(30) Priority: 31.08.2012 JP 2012192693
(71) Applicant: FUJITSU LIMITED, Kawasaki-shi, Kanagawa 211-8588 (JP)
(72) Inventor: Ukai, Megumi, Kanagawa, 211-8588 (JP)
(74) Representative: HOFFMANN EITLE

(57) **Abstract**

A data transmission device (5) includes a packet storing unit (38) that temporarily retains therein multiple data packets. The data transmission device (5) includes a top location instructing unit (34) that indicates a location in the packet storing unit (38) to retain a new created data packet. The data transmission device (5) includes a location information storing unit (32) that has a plurality of entries storing therein a top location of the data packets stored in the data packet storing unit (38).

## Description

### FIELD

The embodiments discussed herein are directed to a data transmission device and a data transmission method.

### BACKGROUND

There is a known conventional communication technology that transmits and receives data between multiple devices. A known example of this communication technology is a technology that, if a device on the reception side is not able to correctly receive data, a device on the transmission side retransmits the data.

For example, the device on the transmission side allocates sequence numbers to multiple pieces of data that are to be transmitted. Then, the device on the transmission side transmits each piece of data to the device on the reception side in the order of the sequence numbers. At this point, the device on the transmission side stores, in a storage device, the transmitted data and the sequence numbers that are allocated to the pieces of data in preparation for retransmission.

If the device on the reception side correctly receives the data, the device on the reception side transmits an Acknowledgement (Ack) to the device on the transmission side. The Ack contains the latest sequence number from among the sequence numbers allocated to pieces of data that have been correctly received. Furthermore, if an error is detected in the received data or if the numbers allocated to the pieces of data are not continuous, the device on the reception side transmits a Negative Acknowledgement (Nak) to the device on the transmission side. The Nak contains the latest sequence number from among the sequence numbers allocated to the pieces of data that have been correctly received before the occurrence of the event that led the Nak to being transmitted.

Then, if the device on the transmission side receives a Nak from the device on the reception side or does not receive either an Ack or a Nak from the device on the reception side for a certain time period, the device on the transmission side performs a retransmission process of the data. Specifically, the device on the transmission side retransmits data, from among the pieces of data stored in the storage device and in the order of their sequence numbers, to the device on the transmission side. The retransmission of data starts from the piece of data with the sequence number immediately subsequent to the sequence number of the last piece of data that is indicated, on the transmission side, as having been correctly received on the reception side.
Patent Document 1: Japanese Laid-open Patent Publication No. 63-177244
Patent Document 2: Japanese Laid-open Patent Publication No. 2008-053783

At this point, with the technology that performs the retransmission process of data described above, the device on the transmission side stores the transmitted data in the storage device. However, if the size of each piece of the data is not fixed, the device on the transmission side identifies, one by one, data to be retransmitted from among the data stored in the storage device. Thus, the device on the transmission side retains combinations of the top addresses containing data and the sequence numbers allocated to the data. Consequently, there is a problem in that the storage capacity needed for the retransmission process increases.

Specifically, if the size of data is not fixed, in order to identify which data is to be retransmitted, i.e., identifying from which piece of data to start retransmission and with which piece of data to end retransmission, from the data in a storage area in the storage device, the device on the transmission side retains the top addresses, each of which contains each piece of data together with the sequence number of each piece of data. Consequently, the device on the transmission side retains, in an associated manner, the top addresses and the sequence numbers for the same number of pieces of data as is stored in the storage device, which increases the storage capacity needed for the retransmission process.

Accordingly, it is an object in one aspect of an embodiment of the present invention to provide a data transmission device and a data transmission method that performs a retransmission process by using a small amount of information.

### SUMMARY

According to an aspect of an embodiment, a data transmission device includes a packet storing unit that temporarily retains therein multiple data packets. The data transmission device includes a top location instructing unit that indicates a location in the packet storing unit to retain a new created data packet. The data transmission device includes a location information storing unit that has a plurality of entries storing therein a top location of the data packets stored in the data packet storing unit.

### BRIEF DESCRIPTION OF DRAWINGS

FIG. 1A is a schematic diagram illustrating components included in an information processing apparatus according to a first embodiment;
FIG. 1B is a schematic diagram illustrating an information processing apparatus according to the first embodiment;
FIG. 2 is a schematic diagram illustrating the functional configuration of a circuit included in a data link layer according to the first embodiment;
FIG. 3 is a schematic diagram illustrating an index table;
FIG. 4 is a schematic diagram illustrating a retransmission buffer;
FIG. 5 is a schematic diagram illustrating the functional configuration of a retransmission timer;
FIG. 6A is a schematic diagram illustrating a process for determining whether the retransmission buffer is full;
FIG. 6B is a schematic diagram illustrating a process for storing an index address in the index table;
FIG. 7 is a schematic diagram illustrating a process for updating a value retained in an index table approved entry number retaining register;
FIG. 8 is a schematic diagram illustrating a process for setting an initial value used at the time of retransmission in a retransmission buffer read address counter;
FIG. 9 is a schematic diagram illustrating a process for setting an initial value used at the time of retransmission in a retransmission sequence number counter;
FIG. 10 is a schematic diagram illustrating a process for detecting the top line of each piece of data at the time of retransmission;
FIG. 11 is a schematic diagram illustrating a process for setting a read start address for retransmission;
FIG. 12 is a schematic diagram illustrating a process for detecting the top of a packet;
FIG. 13 is a schematic diagram illustrating a process for determining the end of the packet;
FIG. 14 is a schematic diagram illustrating a process for determining whether a retransmission process has ended;
FIG. 15 is a schematic diagram illustrating a process for determining whether the index table is full;
FIG. 16A is a schematic diagram illustrating a state in which a retransmission buffer is not empty;
FIG. 16B is a schematic diagram illustrating a state in which the retransmission buffer is empty;
FIG. 17 is a schematic diagram illustrating a process for determining whether the retransmission buffer is full;
FIG. 18 is a schematic diagram illustrating the functional configuration of a data link layer according to a second embodiment;
FIG. 19 is a schematic diagram illustrating a process for setting a skip reservation flag;
FIG. 20 is a schematic diagram illustrating a process for setting a value used when a skip is performed;
FIG. 21 is a schematic diagram illustrating the flow of a process for performing a skip; and
FIG. 22 is a schematic diagram illustrating a process, performed at the time of a skip, for determining whether retransmission has ended.

### DESCRIPTION OF EMBODIMENTS

Preferred embodiments of the present invention will be explained with reference to accompanying drawings.

### [a] First Embodiment

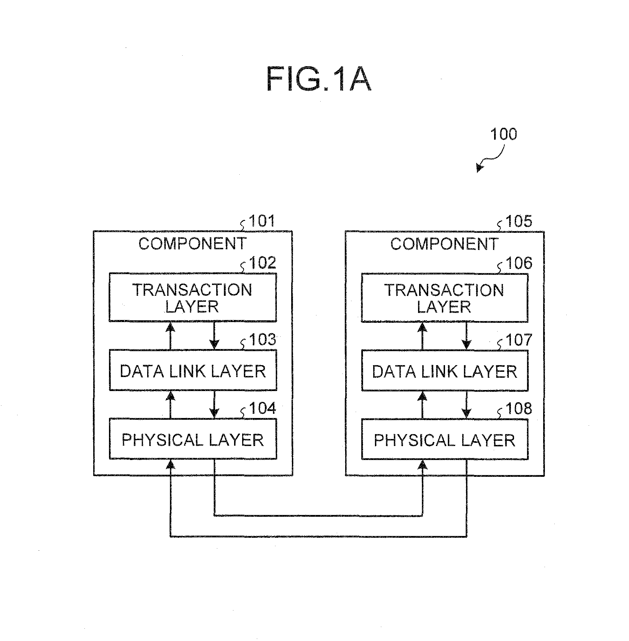

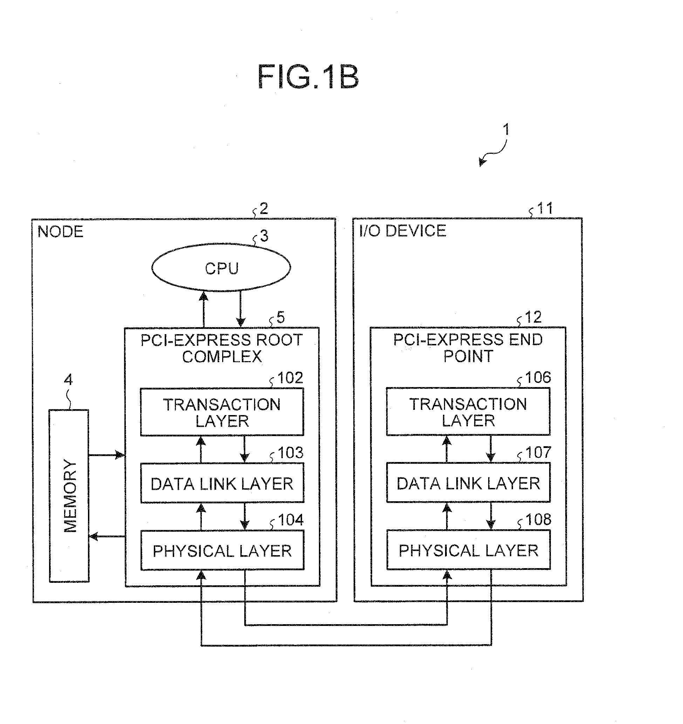

In the following, an example of components included in an information processing apparatus according to a first embodiment will be described with reference to FIGS. 1A and 1B. FIG. 1A is a schematic diagram illustrating components included in an information processing apparatus according to a first embodiment. FIG. 1B is a schematic diagram illustrating an information processing apparatus according to the first embodiment.

As illustrated in FIG. 1A, an information processing apparatus 100 includes a component 101 and a component 105. The component 101 includes circuits that perform processes in the transaction layer, the data link layer, and the physical layer. In the description below, the circuits that perform processes in each layer are represented by a transaction layer 102, a data link layer 103, and a physical layer 104. Similarly to the component 101, the component 105 includes a transaction layer 106, a data link layer 107, and a physical layer 108.

Here, the component 101 is, for example, a Peripheral Components Interconnect-Express (PCIe) root complex 5 included in an information processing apparatus 1 illustrated in FIG. 1B and is arranged in a node 2 that includes a central processing unit (CPU) 3 and a memory 4. The component 105 is, for example, a PCIe end point 12 included in the information processing apparatus 1 illustrated in FIG. 1B and is arranged in an I/O device 11. Furthermore, the component are connected via a PCIe link.

The CPU 3 is an arithmetic processing device that executes various kinds of arithmetic processing in the node 2. Furthermore, the CPU 3 uses the I/O device 11 to transmit and receive a packet with via the PCIe root complex 5 and the PCIe end point 12. The packet mentioned here is, for example, a unit of information constituted by a header and a data payload, and the length of the packet is not fixed. The memory 4 is a storage device included in the node 2.

The I/O device 11 transmits and receives a packet to and from the memory 4 and the CPU 3 in the node 2 via the PCIe end point 12 and the PCIe root complex 5. Of course, the component 105 may also be the PCIe root complex 5 arranged in the node 2, the component 101 may also be the PCIe end point 12 arranged in the I/O device 11, and the PCIe root complex 5 and the PCIe end point 12 may also be a PCIe switch. Furthermore, the component 101 and the component 105 are not limited to being part of the PCIe and they may also be used in another communication system.

In the description below, each of the circuits included in the component 105 has the same functions as those performed by each of the circuits included in the component 101; therefore, descriptions thereof in detail will be omitted. The transaction layer 102 illustrated in FIG. 1A performs a process in the transaction layer when a packet is transmitted and received. For example, the transaction layer 102 creates a transmission packet in accordance with an external unit that is not illustrated in FIG. 1A. For example, if the information processing apparatus 100 illustrated in FIG. 1A is the information processing apparatus 1 illustrated in FIG. 1B, the transaction layer 102 creates a transaction layer packet (TLP) in accordance with a request from the CPU 3.

The data link layer 103 performs a process in the data link layer when a packet is transmitted and received. For example, the data link layer 103 controls the function or the step used for transmitting and receiving a packet. The physical layer 104 performs a process in the physical layer when a packet is transmitted and received. For example, the physical layer 104 has a function of converting information from parallel to serial and transmits the packet subjected to serial conversion to the physical layer 108 in the component 105.

At this point, the component 101 and the component 105 exchanges data with each other via the data link layer 103 and the data link layer 107, respectively. Specifically, the component 101 attaches continuous sequence numbers to multiple packets and transmits the packets, to which the sequence numbers are attached, to the component 105 in the order of the sequence numbers. Furthermore, in preparation for retransmission of a packet, the component 101 retains the packets transmitted to the component 105 in a state in which the packets do not contain the sequence numbers.

In contrast, if the component 105 has correctly received the packets, the component 105 transmits, to the component 101, an Ack containing the sequence numbers that were attached to the correctly received packets. Furthermore, if the component 105 has not correctly received the packets, the component 105 transmits, to the component 101, a Nak containing the sequence numbers of the packets that were correctly received.

If the component 101 receives an Ack or a Nak from the component 105, the component 101 retains the sequence number contained in the Ack or the Nak. Then, if the component 101 receives a Nak from the component 105 or if a time-out occurs without receiving either an Ack or a Nak from the component 105, the component 101 retransmits, to the component 105, packets in the order of the sequence number starting with the sequence number that is immediately subsequent to the retained sequence numbers.

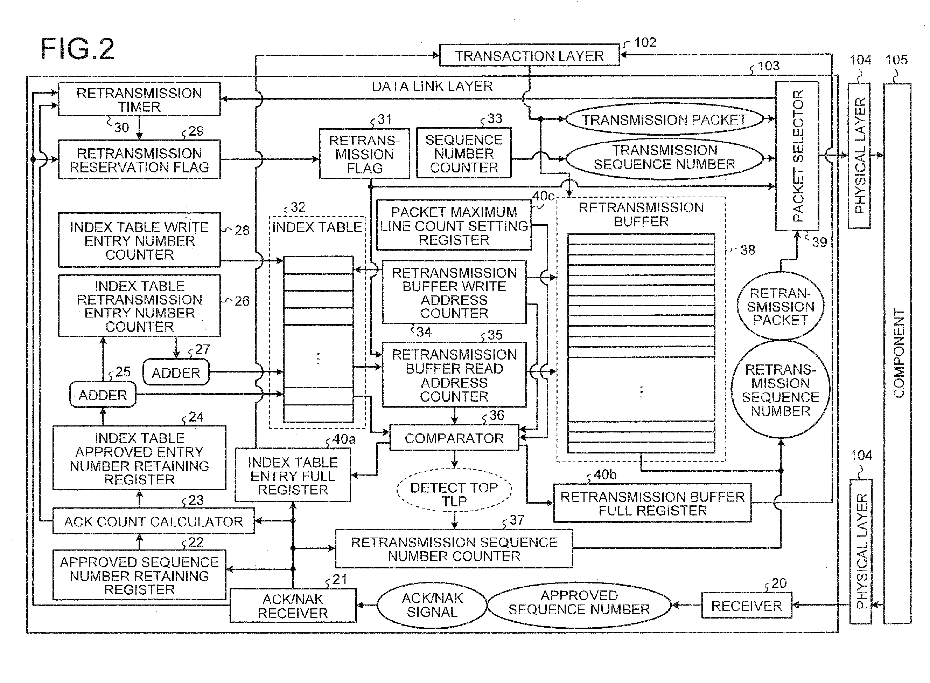

In the following, an example of the configuration of functions included in the data link layer 103 will be described with reference to FIG. 2. FIG. 2 is a schematic diagram illustrating the functional configuration of a circuit included in a data link layer according to the first embodiment. As illustrated in FIG. 2, the data link layer 103 includes a receiver 20, an Ack/Nak receiver 21, an approved sequence number retaining register 22, an Ack count calculator 23, and an index table approved entry number retaining register 24. Furthermore, the data link layer 103 includes an adder 25, an index table retransmission entry number counter 26, an adder 27, an index table write entry number counter 28, a retransmission reservation flag 29, a retransmission timer 30, and a retransmission flag 31.

Furthermore, the data link layer 103 includes an index table 32, a sequence number counter 33, a retransmission buffer write address counter 34, a retransmission buffer read address counter 35, a comparator 36, a retransmission sequence number counter 37, and a retransmission buffer 38. Furthermore, the data link layer 103 includes a packet selector 39, an index table entry full register 40a, a retransmission buffer full register 40b, and a packet maximum line count setting register 40c.

In the following, the function performed by the data link layer 103 will be described. First, the index table 32 and the retransmission buffer 38 will be described. The index table 32 is a storage device that stores therein an index address that is the top address of the storage area in the retransmission buffer 38 in which the component 101 stores a packet in preparation for retransmission.

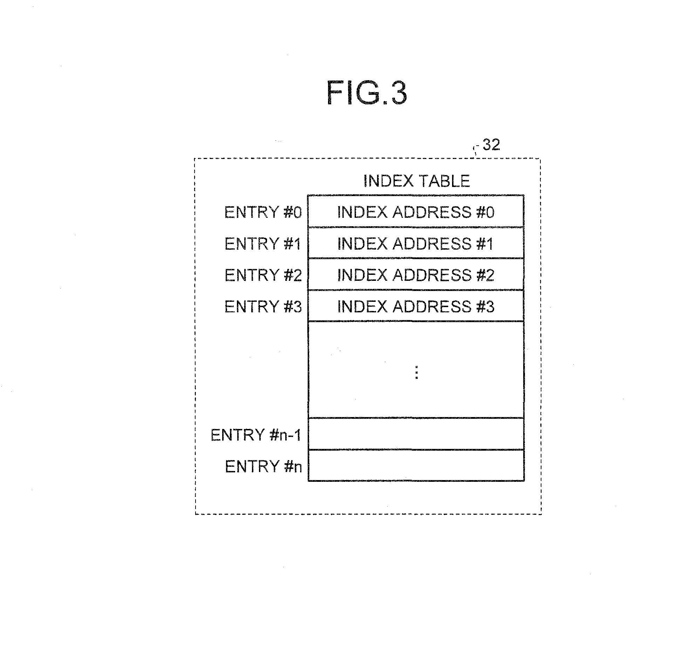

In the following, an example of the index table 32 will be described with reference to FIG. 3. FIG. 3 is a schematic diagram illustrating an index table. For example, the index table 32 has multiple entries, to each of which a number is attached. Each entry stores therein an index address. In the example illustrated in FIG. 3, the index table 32 has entries with the entry numbers #0 to #n and stores, in the entries #0 to #3, index addresses #0 to #3, respectively.

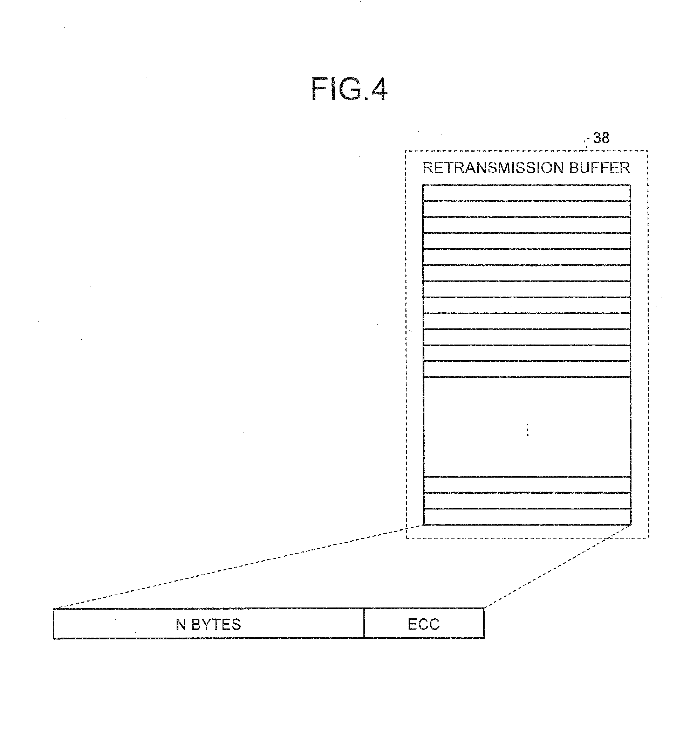

The retransmission buffer 38 is a storage device in which the component 101 stores a packet in preparation for retransmission. In the following, an example of the retransmission buffer 38 will be described with reference to FIG. 4. FIG. 4 is a schematic diagram illustrating a retransmission buffer. As illustrated in FIG. 4, the retransmission buffer 38 has multiple lines. Each of the lines has an area for storing N-byte data and an area for storing Error Check and Correct (ECC) data that is used to detect an error in data that is stored in an area in the same line. The packet stored in the retransmission buffer 38 does not contain a sequence number and is stored by using one or more lines in the retransmission buffer 38. Furthermore, the number of lines used when a packet is stored differs depending on the length of the packet.

A description will be given here by referring back to FIG. 2. The receiver 20 receives a packet sent from the component 105 through the link between the components via the physical layer 108. Specifically, the receiver 20 receives an Ack or a Nak including an approved sequence number that is the sequence number of a packet correctly received by the component 105. Then, the receiver 20 extracts, from the Ack or the Nak, both an Ack signal indicating Acknowledgement and an approved sequence number or both a Nak signal indicating Negative Acknowledgement and an approved sequence number and then outputs, to the Ack/Nak receiver 21, the extracted Ack signal or Nak signal and approved sequence number.

If the Ack/Nak receiver 21 receives the approved sequence number, the Ack/Nak receiver 21 performs the following process. Namely, the Ack/Nak receiver 21 outputs the approved sequence number to the approved sequence number retaining register 22, the Ack count calculator 23, the retransmission sequence number counter 37, and the index table entry full register 40a. Furthermore, if the Ack/Nak receiver 21 receives a Nak, the Ack/Nak receiver 21 sets the retransmission reservation flag 29 to "High". Furthermore, if the Ack/Nak receiver 21 receives the Ack or Nak, the Ack/Nak receiver 21 notifies retransmission timer 30 of whichever it received.

If the approved sequence number retaining register 22 receives the approved sequence number from the Ack/Nak receiver 21, the approved sequence number retaining register 22 retains the received approved sequence number. Furthermore, if the approved sequence number retaining register 22 receives a new approved sequence number from the Ack/Nak receiver 21, the approved sequence number retaining register 22 outputs the approved sequence number that has been retained therein to the Ack count calculator 23 and then retains the new approved sequence number.

By using the approved sequence numbers received from the Ack/Nak receiver 21 and the approved sequence number retaining register 22, the Ack count calculator 23 determines, from the index table 32, an entry number that stores therein an index address related to the packet that is to be retransmitted.

Specifically, the Ack count calculator 23 subtracts the approved sequence number that is received from the approved sequence number retaining register 22 from the approved sequence number that is received from the Ack/Nak receiver 21. More specifically, the Ack count calculator 23 calculates the difference between the approved sequence number received immediately previously by the component 101 from the component 105 and the approved sequence number newly received, thereby calculating the number of packets correctly received by the component 105.

Then, the Ack count calculator 23 outputs the calculated value to the index table approved entry number retaining register 24. Furthermore, if the result of the calculation of the number of packets correctly received indicates a value of 1 or more, the Ack count calculator 23 outputs this result to the retransmission timer 30. Furthermore, if the retransmission timer 30 has already received a notification from the Ack/Nak receiver 21 that the Ack/Nak receiver 21 has received the Ack, the retransmission timer 30 resets the count, which is used to determine a time-out, of the retransmission timer 30.

The index table approved entry number retaining register 24 retains, from among the entries included in the index table 32, an entry number indicating an entry in which an index address of a line that is stored in the retransmission buffer 38 and that stores therein the top of the packet that is most recently approved by the component 105. Specifically, similarly to the index table write entry number counter 28 that will be described later, the index table approved entry number retaining register 24 retains, as an initial value, an entry number "0" and then adds the value received from the Ack count calculator 23 to the retained value.

More specifically, by adding the number of packets approved by the component 105 every time an Ack/Nak is received, the index table approved entry number retaining register 24 retains the entry number, in the index table 32, that stores therein the index address in which the top of the packet that is most recently approved by the component 105 is stored.

The adder 25 outputs, to the index table retransmission entry number counter 26 and the index table 32, a value obtained by adding 1 to the value retained in the index table approved entry number retaining register 24. Specifically, by adding 1 to the entry number, in the index table 32, that stores therein the index address of the top of the packet that is most recently approved by the component 105, the adder 25 calculates an entry number of an entry that stores therein the index address of the top of the packet that will to be approved next.

The packet that will to be approved next mentioned here is a first packet that is to be retransmitted under the present condition. Consequently, the adder 25 outputs, to the index table retransmission entry number counter 26, an entry number of an entry that stores therein the index address that stores therein the top of the packet to be retransmitted.

The index table retransmission entry number counter 26 is a counter that retains, from among the entries included in the index table 32, the entry number of the entry that stores therein an index of a packet to be retransmitted. Specifically, if the index table retransmission entry number counter 26 receives an entry number that is output from the adder, the index table retransmission entry number counter 26 retains the received entry number as an initial value of the counter and outputs the retained entry number to the adder 27.

The adder 27 outputs, to the index table 32, the entry number with a value obtained by adding 1 to the entry number that has been output by the index table retransmission entry number counter 26. Specifically, from among the packets to be retransmitted, the adder 27 outputs the entry number that retains the index address in which the top of the packet that is to be transmitted subsequent to the packet that is currently being transmitted is stored.

The index table write entry number counter 28 retains an entry number of an entry that is newly written in an index in the index table 32. For example, the index table write entry number counter 28 stores therein, as an initial value, the entry number "#0". In such a case, the index table write entry number counter 28 outputs the entry number "#0" to the index table 32.

Then, if an index address is stored in the entry with the entry number "#0", the index table write entry number counter 28 adds 1 to the entry number retained therein and then retains the entry number "#1". Then, the index table write entry number counter 28 outputs the new entry number "#1" to the index table 32. Consequently, the index table 32 stores, for the entries, index addresses in ascending numerical order.

The retransmission reservation flag 29 is flag information indicating whether a packet is to be retransmitted. For example, the retransmission reservation flag 29 is 1-bit information stored in, for example, a flip-flop. The status "High (1)" indicates that a packet is to be retransmitted and the status "Low (0)" indicates that a packet is not to be retransmitted.

The retransmission timer 30 determines whether a response from the component 105 has timed out. Specifically, the retransmission timer 30 includes a counter that performs counting at a predetermined time. If the counter reaches a predetermined value, the retransmission timer 30 sets the retransmission reservation flag 29 to "High". Furthermore, if the retransmission timer 30 receives, from the Ack/Nak receiver 21 and the Ack count calculator 23, a notification that they have received an Ack indicating that one or more packets were approved, the retransmission timer 30 resets the counter.

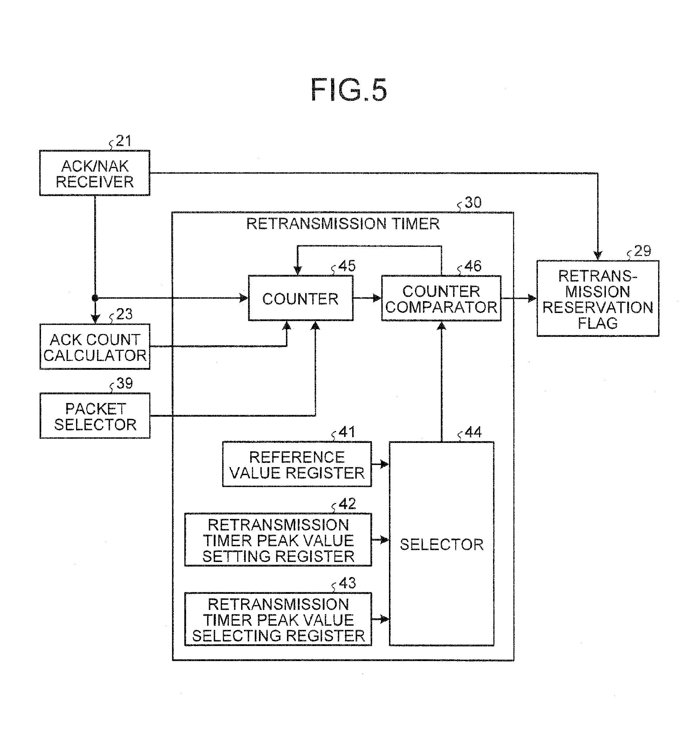

In the following, an example of the functional configuration of the retransmission timer 30 will be described with reference to FIG. 5. FIG. 5 is a schematic diagram illustrating the functional configuration of a retransmission timer. In the example illustrated in FIG. 5, the retransmission timer 30 includes a reference value register 41, a retransmission timer peak value setting register 42, a retransmission timer peak value selecting register 43, a selector 44, a counter 45, and a counter comparator 46.

The reference value register 41 is a register that can set multiple predetermined values that are counted by the retransmission timer; selects one predetermined value from the multiple predetermined values depending on the condition, such as the operational frequency of the information processing apparatus 100; and outputs the selected predetermined value. The retransmission timer peak value setting register 42 is a register that can freely set a predetermined value, which can be set in the retransmission timer 30, to the values counted until a time-out occurs. The retransmission timer peak value selecting register 43 stores therein a value for selecting a predetermined value that is set in the retransmission timer 30 and that is counted until a time-out occurs.

The selector 44 acquires values stored in the reference value register 41 and the retransmission timer peak value setting register 42. Then, on the basis of the value indicated by the retransmission timer peak value selecting register 43, the selector 44 selects a value from among the values acquired from the reference value register 41 and the retransmission timer peak value setting register 42 as a predetermined value that is to be counted until a time-out occurs and then outputs the selected value to the counter comparator 46.

The counter 45 is a counter that performs counting at a predetermined time. If the counter 45 receives, from the packet selector 39, a notification that the end of a packet has been transmitted, the counter 45 adds 1 to the value of the counter. Furthermore, if the value that is being counted indicates a value of 1 or more, the counter 45 continues the counting by adding a mycycle 1. Furthermore, if the counter 45 receives, from the Ack/Nak receiver 21 and the Ack count calculator 23, a notification that they have received an Ack indicating that one or more packets were approved, the counter 45 resets the value that is being counted to 0 once and then starts the counting from 1. Furthermore, if the counter 45 receives, from the Ack/Nak receiver 21, a notification that it has received a Nak, the counter 45 resets the value that is being counted to 0.

Furthermore, if the counter 45 is instructed by the counter comparator 46 to reset the value that is being counted, the counter 45 resets the value that is being counted to 0.

The counter comparator 46 compares the value that is being counted by the counter 45 with the value that is output by the selector 44. If the value that is being counted by the counter 45 matches the value that is output by the selector 44, the counter comparator 46 sets the retransmission reservation flag 29 to "High" and instructs the counter 45 to reset the value that is being counted. Specifically, if a time-out occurs, the counter comparator 46 sets the retransmission reservation flag 29 to "High".

A description will be given here by referring back to FIG. 2. The retransmission flag 31 is flag information indicating whether a retransmission process is performed. For example, there may be a case in which the retransmission buffer 38 is not able to read a packet when, for example, a packet is being written. Accordingly, if the retransmission reservation flag 29 is "High" and if a packet can be read from the retransmission buffer 38, the retransmission flag 31 shifts to "High".

The sequence number counter 33 is a counter that counts the sequence numbers attached to the packets to be transmitted. Specifically, the sequence number counter 33 outputs, to the packet selector 39 together with a transmission packet received from the transaction layer 102, an output from the counter as a transmission sequence number. The sequence number counter 33 adds 1 to a sequence number every time the sequence number counter 33 outputs a sequence number to the packet selector 39.

The retransmission buffer write address counter 34 specifies an index address when a packet is stored in the retransmission buffer 38. Specifically, if the transaction layer 102 outputs a new packet, the retransmission buffer write address counter 34 outputs the retained index address to the retransmission buffer 38 and the index table 32.

Specifically, the retransmission buffer write address counter 34 outputs, to the retransmission buffer 38 and the index table 32, an index address used when a packet is stored in the retransmission buffer 38. Consequently, the retransmission buffer 38 starts to store a packet from a line indicated by the index address that has been output by the retransmission buffer write address counter 34. Furthermore, when the index table 32 stores the top of the packet that has been output by the transaction layer 102 in the retransmission buffer 38, the index table 32 stores the index address that stores therein the top of the packet in an entry with an entry number that is output by the index table write entry number counter 28.

Furthermore, the retransmission buffer write address counter 34 adds 1 to an index address every time one line of a packet is stored in the retransmission buffer 38 and then outputs the index address subjected to the addition to the retransmission buffer 38. Consequently, the retransmission buffer 38 stores the packet output by the transaction layer 102 in sequential order in the lines. Furthermore, the retransmission buffer write address counter 34 outputs the index address that is being counted to the comparator 36.

The retransmission buffer read address counter 35 stores therein an index address used to read, from the retransmission buffer 38, a packet to be retransmitted. Specifically, if the retransmission flag 31 is "High", the retransmission buffer read address counter 35 acquires, from among the entries in the index table 32, an index address stored in an entry that is indicated by the entry number output by the adder 25. Then, the retransmission buffer read address counter 35 retains the index address that has been read from the index table 32 as an initial value. Specifically, from among the lines that store therein packets to be retransmitted, the retransmission buffer read address counter 35 retains the index address in the first line.

Furthermore, by outputting the retained index address to the retransmission buffer 38, the retransmission buffer read address counter 35 allows the retransmission buffer 38 to output the packet to be retransmitted. Furthermore, the retransmission buffer read address counter 35 adds 1 to the retained index address every time it reads one line of data from the retransmission buffer 38. Then, by outputting a new index address to the retransmission buffer 38, the retransmission buffer read address counter 35 outputs a new packet to be retransmitted.

The comparator 36 acquires a value retained in the retransmission buffer read address counter 35, i.e., an index address of a line that is to be read by the retransmission buffer 38. Furthermore, the comparator 36 acquires, from among the entries in the index table 32, an index address stored in an entry with the entry number that has been output by the adder 27, i.e., an index address of a line that is to be read next by the retransmission buffer 38.

Then, the comparator 36 compares the value that is retained in the retransmission buffer read address counter 35 with the index address that has been read from the index table 32. If the value that is retained in the retransmission buffer read address counter 35 matches the index address that has been read from the index table 32, the comparator 36 notifies the retransmission sequence number counter 37 that the top of the packet is detected.

Specifically, if the index address of the line to be read by the retransmission buffer 38 matches the index address of the line that stores therein the top of the packet that is to be read immediately subsequent to the packet that is currently being read, the comparator 36 determines that the line that will be read is the top of a new packet. Then, for the packet that will be read next, the comparator 36 instructs the retransmission sequence number counter 37 to attach a sequence number that is different from the sequence number of the packet that has been immediately previously been read.

Furthermore, if the index address read from the index table 32 matches the value retained in the retransmission buffer read address counter 35 and if the top of the packet is detected, the comparator 36 performs the following process. Namely, the comparator 36 instructs the index table retransmission entry number counter 26 to perform an update. Then, the index table retransmission entry number counter 26 adds 1 to the retained entry number and outputs a new entry number.

Furthermore, the comparator 36 may also identify the end of a packet. For example, by subtracting 1 from the index address acquired from the index table 32, the comparator 36 identifies the index address that stores therein the end of the packet. Then, if the value retained in the retransmission buffer read address counter 35 matches the index address that stores therein the end of the packet, the comparator 36 may also notify the retransmission sequence number counter 37 that the line that will be read next is the end of the packet.

Furthermore, the comparator 36 compares the value retained in the retransmission buffer write address counter 34 after the addition with the value retained in the retransmission buffer read address counter 35. If the value retained in the retransmission buffer write address counter 34 matches the value retained in the retransmission buffer read address counter 35, the comparator 36 determines that all of the entries in the retransmission buffer 38 have been read. Thereafter, the comparator 36 sets the retransmission flag 31 to "Low" and thus ends the retransmission process. In FIG. 2, in order to avoid the drawing being complicated, an arrow indicating the process in which the comparator 36 sets the retransmission flag 31 to "Low" is not illustrated.

Furthermore, the comparator 36 acquires the value retained in the index table write entry number counter 28 and the value retained in the index table approved entry number retaining register 24. Furthermore, the comparator 36 compares the value retained in the index table write entry number counter 28 with the value retained in the index table approved entry number retaining register 24.

Then, if a packet with a new index address is stored in the index table 32 in the state in which the compared values match, the comparator 36 stores, in the index table entry full register 40a, a flag indicating that the index table 32 is full. For example, the comparator 36 stores "High" in the index table entry full register 40a.

Furthermore, the comparator 36 compares the value retained in the index table write entry number counter 28 with the value obtained by adding 1 to the value retained in the index table approved entry number retaining register 24. If the compared values match, the comparator 36 determines whether the flag indicating that the index table 32 is full is stored in the index table entry full register 40a.

If the flag indicating that the index table 32 is full is not stored in the index table entry full register 40a, the comparator 36 determines that the retransmission buffer 38 is empty and the index table 32 is empty. In contrast, if a flag indicating that the index table 32 is full is stored in the index table entry full register 40a, the comparator 36 determines that the retransmission buffer 38 is not empty.

Furthermore, if the compared values do not match, the comparator 36 stores the flag indicating that the index table 32 has some free space, for example, "Low", in the index table entry full register 40a. If the flag indicating that the index table 32 is full is stored in the index table entry full register 40a, the transaction layer 102 stops the transmission of the packet by suspending the output of the packet.

Furthermore, if the remaining number of lines in the retransmission buffer 38 is less than the number of lines needed for the packet having the maximum size, the transaction layer 102 stops the transmission of the packet. The value of the maximum size of a packet varies in accordance with the system. A value indicating the number of lines needed for a packet having the maximum size may also be directly given from the outside (note illustrated) or may also be set in a register. Furthermore, the number of needed lines may also be calculated by using a calculator from the maximum packet size that is given from the outside or the maximum packet size that is set in a register.

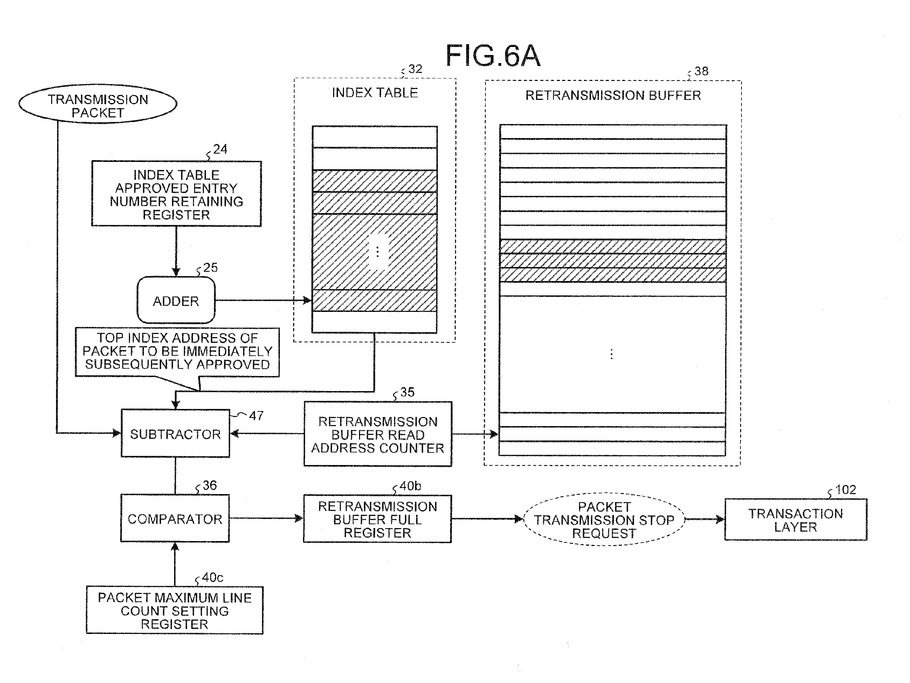

In the following, a process for stopping transmission of a packet when the remaining number of lines in the retransmission buffer 38 is less than the number of lines needed by a packet of the maximum size will be described with reference to FIG. 6A. FIG. 6A is a schematic diagram illustrating a process for determining whether the retransmission buffer is full. The retransmission buffer full register 40b illustrated in FIG. 6A is a register that stores therein a flag that indicates whether the number of remaining lines in the retransmission buffer 38 is less than that needed by a packet with the maximum size.

Furthermore, the packet maximum line count setting register 40c is a register to which the writing is performed from the outside (not illustrated) and is a register that stores therein the number of lines needed by a packet with the maximum size. Although not illustrated in FIG. 2 to avoid the drawing being complicated, in the example illustrated in FIG. 6A, it is assumed that the transaction layer 102 includes a subtractor 47 that subtracts a value of the retransmission buffer write address counter 34 from the top of the index address in the packet that will be transmitted first under the present condition.

The remaining number of lines in the retransmission buffer 38 can be obtained by subtracting a value of an index address, in the retransmission buffer 38, in which writing is to be immediately subsequently performed, from a value of an index address, in the retransmission buffer 38, in which the top of the packet that is to be immediately subsequently approved is stored. Specifically, the index table approved entry number retaining register 24 outputs a value retained therein to the adder 25. From among the entries in the index table 32, the index address that is stored in the entry indicated by the entry number that is output by the adder 25 is the index address that stores therein the top of the packet that is to be approved next. This is also an index address of the top of the packet that is to be retransmitted first under the present condition. The result of subtracting the value in the retransmission buffer write address counter 34 from the above gives the remaining number of lines in the retransmission buffer 38.

Then, every time the comparator 36 receives the end of the packet from the transaction layer 102, the comparator 36 compares the remaining number of lines in the retransmission buffer 38, i.e., an output from the subtractor 47, with the value in the packet maximum line count setting register 40c. Thereafter, if the result of the comparison indicates that the remaining number of lines is less than the value stored in the packet maximum line count setting register 40c, the comparator 36 recognizes that the retransmission buffer 38 has become full and then sets the retransmission buffer full register 40b to "High". If "High" is set in the retransmission buffer full register 40b indicating that the retransmission buffer 38 is full, the transaction layer 102 recognizes that a request for stopping the packet transmission has been sent and thus stops the packet transmission by suspending the output of the immediately subsequent packet.

Furthermore, if the comparator 36 determines that the index table 32 is empty, retransmission is not performed because the packet to be retransmitted is not stored in the retransmission buffer 38. For example, if the comparator 36, when the retransmission reservation flag 29 is "High", determines that all of the transmitted packets are approved, determines that a valid packet is not present in the index table 32, and determines that the index table 32 is empty, the comparator 36 resets the retransmission reservation flag 29 to "Low".

A description will be given here by referring back to FIG. 2. For the packet that is to be retransmitted, the retransmission sequence number counter 37 attaches, as a retransmission sequence number, the same sequence number as that allocated at the first transmission. Specifically, the retransmission sequence number counter 37 retains, as an initial value, a value obtained by adding 1 to the sequence number that is retained in the approved sequence number retaining register 22. Furthermore, if the comparator 36 identifies the top of the packet and instructs the retransmission sequence number counter 37 to attach a sequence number that is different from that added to the packet that has immediately previously been read by the comparator 36, the retransmission sequence number counter 37 adds 1 to the retained sequence number and then outputs the new sequence number to the packet selector 39.

Specifically, the retransmission sequence number counter 37 retains the sequence number of a packet that has not been approved from the component 105, adds 1 to the retained sequence number every time it detects the top of the packet retransmitted by the comparator 36, and outputs the retransmission sequence number to the packet selector 39. Consequently, because the transaction layer 102 does not need all of the retransmission sequence numbers, the storage capacity needed to perform the retransmission process can be reduced. Furthermore, when the end of a packet is identified, the comparator 36 may also add 1 to the retransmission sequence number counter 37 in preparation for the subsequent packet. The added retransmission sequence number is output, as a sequence number that is to be used for an immediately subsequent packet, to the packet selector 39 together with the immediately subsequent read packet.

The packet selector 39 receives a packet from the transaction layer 102 and also receives a sequence number from the sequence number counter 33. Furthermore, the packet selector 39 receives an output from the retransmission flag 31. If the retransmission flag 31 indicates "Low", the packet selector 39 selects a packet, which is received from the transaction layer 102 and to which the sequence number received from the sequence number counter 33 is attached, and outputs the packet to the component 105 via the physical layer 104 through the link between the components.

Furthermore, the packet selector 39 receives, from the retransmission buffer 38, a packet to be retransmitted and receives a retransmission sequence number from the retransmission sequence number counter 37. If the retransmission flag 31 indicates "High", the packet selector 39 selects a packet, which is to be retransmitted and to which a retransmission sequence number is attached, and transmits the packet to the component 105 via the physical layer 104 through the link between the components. Furthermore, if the packet selector 39 transmits a packet, i.e., transmits the end of the packet, the packet selector 39 notifies the retransmission timer 30 that the end of the packet has been sent.

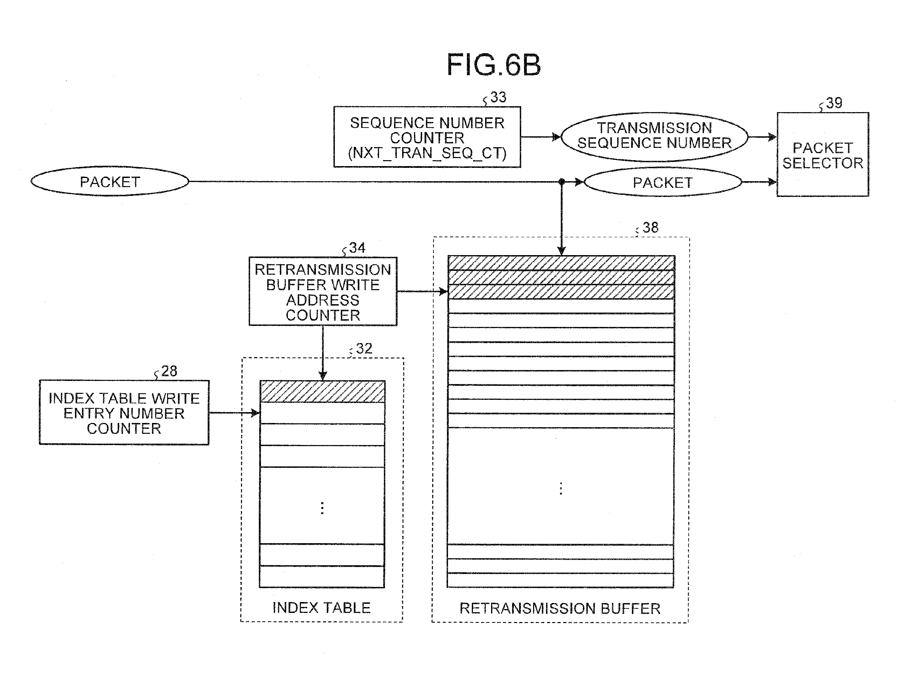

In the following, a process for storing an index address in the index table 32 will be described with reference to FIG. 6B. FIG. 6B is a schematic diagram illustrating a process for storing an index address in the index table. If the transaction layer 102 outputs a packet that is to be immediately subsequently transmitted, the sequence number counter (NXT_TRAN_SEQ_CT) 33 inputs a transmission sequence number to the packet selector 39. Consequently, the packet selector 39 transmits a packet that contains the transmission sequence number and the packet.

The packet output from the transaction layer 102 is input to the retransmission buffer 38. Then, the retransmission buffer 38 stores, in the order of the index addresses indicated by the retransmission buffer write address counter 34, the packet in one or more lines.

Furthermore, from among the index addresses output from the retransmission buffer write address counter 34, the index table 32 receives an index address in a first line from among the multiple lines that contains the packet. Then, the index table 32 stores the index address in the entry with the entry number that is output from the index table write entry number counter 28.

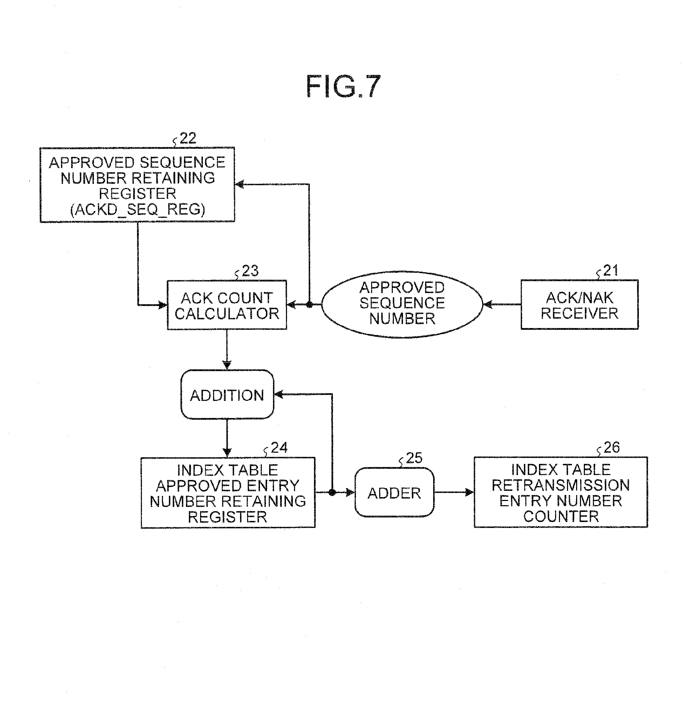

In the following, a process will be described with reference to FIG. 7 for storing, in the index table approved entry number retaining register 24, a sequence number of a packet approved by the component 105. FIG. 7 is a schematic diagram illustrating a process for updating a value retained in an index table approved entry number retaining register.

In the example illustrated in FIG. 7, the Ack/Nak receiver 21 outputs an approved sequence number stored in an Ack to the Ack count calculator 23 and to the approved sequence number retaining register (ACKD_SEQ_REG) 22. Then, the approved sequence number retaining register 22 outputs the approved sequence number that was immediately previously stored to the Ack count calculator 23 and then retains the newly received approved sequence number.

The Ack count calculator 23 subtracts a value of the approved sequence number received from the approved sequence number retaining register 22 from a value of the approved sequence number received from the Ack/Nak receiver 21. Then, the Ack count calculator 23 stores, in the index table approved entry number retaining register 24, the sum of the calculated value and the value stored in the index table approved entry number retaining register 24 as a new approved entry number.

The adder 25 stores, in the index table retransmission entry number counter 26, a value obtained by adding 1 to the entry number stored in the index table approved entry number retaining register 24. Specifically, the adder 25 stores, in the index table retransmission entry number counter 26, the entry number allocated to the packet that will to be retransmitted first under the present condition.

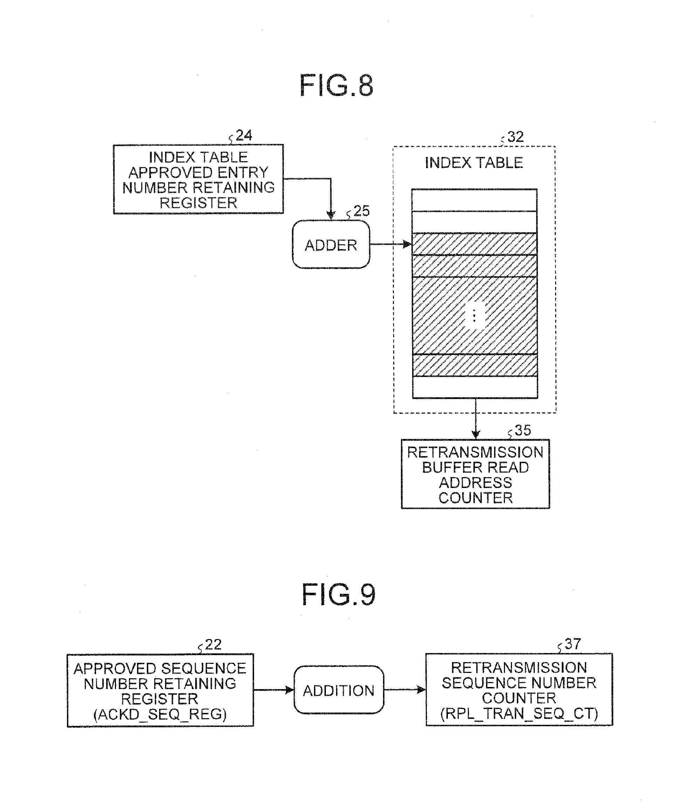

In the following, the flow of a process for setting an initial value used at the time of retransmission in the retransmission buffer read address counter 35 will be described with reference to FIG. 8. FIG. 8 is a schematic diagram illustrating a process for setting an initial value used at the time of retransmission in a retransmission buffer read address counter. For example, the adder 25 outputs, to the index table 32, an entry number obtained by adding 1 to the entry number retained in the index table approved entry number retaining register 24. Then, if the retransmission flag 31 becomes "High", the retransmission buffer read address counter 35 retains the index address stored in the entry indicated by the entry number that has been output by the adder 25.

Specifically, the index table approved entry number retaining register 24 retains the entry number of the entry that stores therein the top of the index address of the packet that is most recently approved by the component 105. Then, by adding 1 to the entry number retained in the index table approved entry number retaining register 24, the adder 25 calculates the entry number of the entry in which he top of the index address of the packet to be retransmitted is stored. Consequently, by retaining the index address stored in the entry indicated by the entry number that is output by the adder 25, the retransmission buffer read address counter 35 can retain the index address in which the top of the packet to be retransmitted is stored.

In the following, the flow of a process for setting an initial value used for retransmitting a packet in the retransmission sequence number counter 37 will be described with reference to FIG. 9. FIG. 9 is a schematic diagram illustrating a process for setting an initial value used at the time of retransmission in a retransmission sequence number counter. For example, the retransmission sequence number counter 37 (RPL_TRAN_SEQ_CT) stores therein a sequence number obtained by adding 1 to the sequence number retained in the approved sequence number retaining register (ACKD_SEQ_REG) 22. Consequently, in the retransmission sequence number counter 37, the same sequence number as that allocated to the packet to be retransmitted by the sequence number counter 33 at the time of first transmission is set in the packet to be retransmitted.

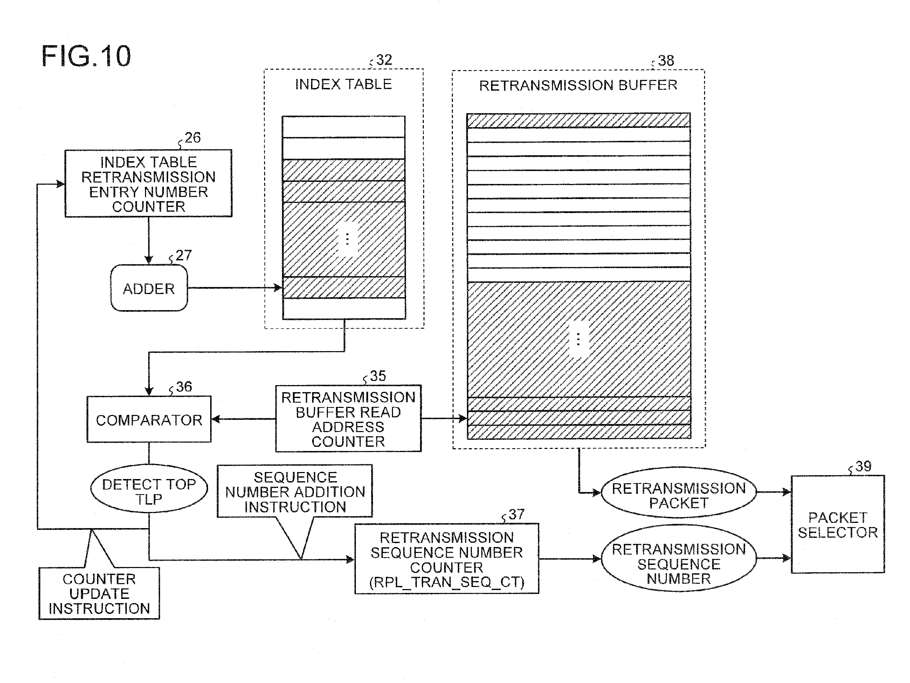

In the following, the flow of a process for detecting the top line for each packet when a packet is being retransmitted will be described with reference to FIG. 10. FIG. 10 is a schematic diagram illustrating a process for detecting the top line of each piece of data at the time of retransmission. For example, the comparator 36 acquires an index address that is stored in an entry with an entry number that is obtained by adding 1 to the entry number output from the adder 27, i.e., the entry number retained in the index table retransmission entry number counter 26. Specifically, the comparator 36 acquires an index address of a line, in the retransmission buffer 38, that stores therein a packet that is to be immediately subsequently retransmitted.

Then, the comparator 36 compares the index address acquired from the index table 32 with the index address retained in the retransmission buffer read address counter 35. If the compared addresses match, the comparator 36 notifies the retransmission sequence number counter 37 that the top of the packet has been detected.

Then, the retransmission sequence number counter 37 adds 1 to the retained sequence number and outputs the new sequence number to the packet selector 39. Then, the packet selector 39 reads the packet that is read from the retransmission buffer 38 together with the new sequence number and then outputs a packet to which the read sequence number is attached. When the comparator 36 detects the end of a packet, the comparator 36 may also add 1 to the sequence number retained in the retransmission sequence number counter 37 in preparation for the next packet. In such a case, the data link layer 103 outputs, to the packet selector 39 together with the next packet read from the retransmission buffer 38, a retransmission sequence number to which 1 is added as a sequence number for the next packet.

If the comparator 36 detects the top of a packet, the comparator 36 instructs the index table retransmission entry number counter 26 to update the entry number. Consequently, the index table retransmission entry number counter 26 adds 1 to the retained entry number and outputs a new entry number.

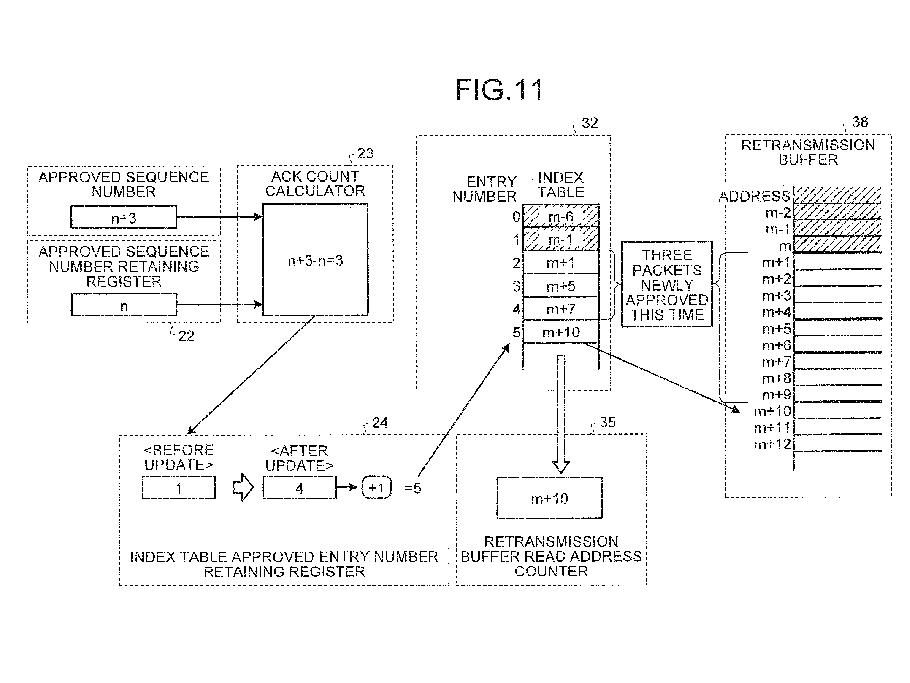

In the following, a specific example of a process performed by the data link layer 103 will be described with reference to FIGS. 11 to 16. First, a specific example of a process for setting an initial value used to retransmit a packet in the retransmission buffer read address counter 35 will be described with reference to FIG. 11.

FIG. 11 is a schematic diagram illustrating a process for setting a read start address for retransmission. In the example illustrated in FIG. 11, the index table 32 stores, in the entries with the entry numbers "0" to "5", the index addresses "m-6", "m-1", "m+1", "m+5", "m+7", and "m+10", respectively.

Furthermore, as illustrated by the oblique lines in FIG. 11, the packets that are in the retransmission buffer 38 and that are stored in the area up to the address "m" are the packets that have already been approved by the component 105. Specifically, the packets stored in the storage area indicated by the index addresses that are stored in the entry numbers "0" and "1" are the packets that have already been approved by the component 105.

Furthermore, "n" is retained in the approved sequence number retaining register 22 as the approved sequence number. Furthermore, the index table approved entry number retaining register 24 stores therein the entry number "1", as a value before an update, of an entry in which an index address that stores therein the top of an approved packet is stored.

At this point, because the component 105 has approved three packets, the Ack count calculator 23 receives "n+3" as the new approved sequence number. Then, the Ack count calculator 23 calculates the value of "3" obtained by subtracting the sequence number retained in the approved sequence number retaining register 22 from the new approved sequence number. Then, the Ack count calculator 23 outputs the value "3" to the index table approved entry number retaining register 24.

Then, the index table approved entry number retaining register 24 retains the entry number "4" obtained by adding the value of "3" that is received from the Ack count calculator 23 to "1". Furthermore, the index table approved entry number retaining register 24 outputs the entry number "4" to the adder 25. Consequently, the adder 25 outputs the entry number "5" to the index table 32.

Then, the retransmission buffer read address counter 35 retains the index address "m+10" that is stored in the entry number "5". Consequently, the retransmission buffer read address counter 35 retains a packet that has not currently been approved, i.e., the top address of the packet to be retransmitted.

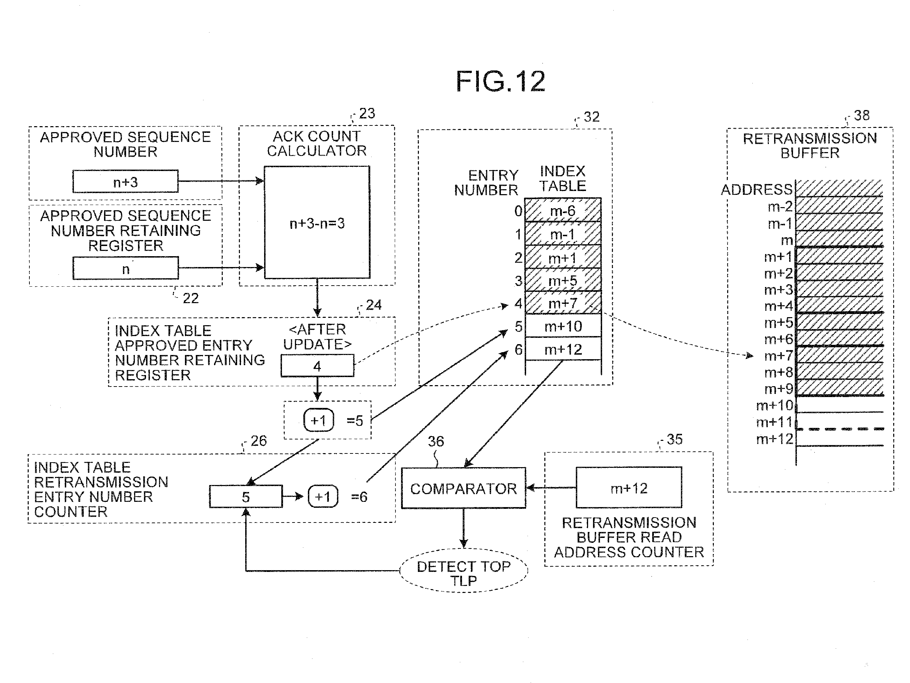

In the following, a specific example of a process for detecting the top line of a packet when the packet is being retransmitted will be described with reference to FIG. 12. FIG. 12 is a schematic diagram illustrating a process for detecting the top of a packet. In the example illustrated in FIG. 12, it is assumed that the approved sequence number retaining register 22, the index table 32, and the retransmission buffer 38 store therein the same packet as that illustrated in FIG. 11.

Furthermore, it is assumed that the index table 32 stores, in the entry with the entry number "6", the index address "m+12". Furthermore, in the example illustrated in FIG. 12, as illustrated by the oblique lines, it is assumed that the packets stored in the index addresses up to "m+9" in the retransmission buffer 38 are newly approved.

For example, the Ack count calculator 23 outputs, to the index table approved entry number retaining register 24, the value "3" obtained by subtracting the sequence number "n" retained in the approved sequence number retaining register 22 from the approved sequence number "n+3". Then, the index table approved entry number retaining register 24 outputs the updated value "4" to the adder 25. Consequently, the index table retransmission entry number counter 26 retains the value "5".

The adder 27 outputs the value "6" obtained by adding 1 to the value "5" retained in the index table retransmission entry number counter 26. Consequently, the comparator 36 acquires the index address "m+12" retained in the entry number "6". Then, if the index address retained in the retransmission buffer read address counter 35 becomes "m+12", the comparator 36 determines that it has detected the top of a packet.

Furthermore, if the comparator 36 detects the top of the packet, the comparator 36 instructs the index table retransmission entry number counter 26 to update the retained value. As described above, by comparing the index address of the packet that is to be immediately subsequently transmitted with the index address retained in the retransmission buffer read address counter 35, the data link layer 103 can identify the packet to be immediately subsequently transmitted.

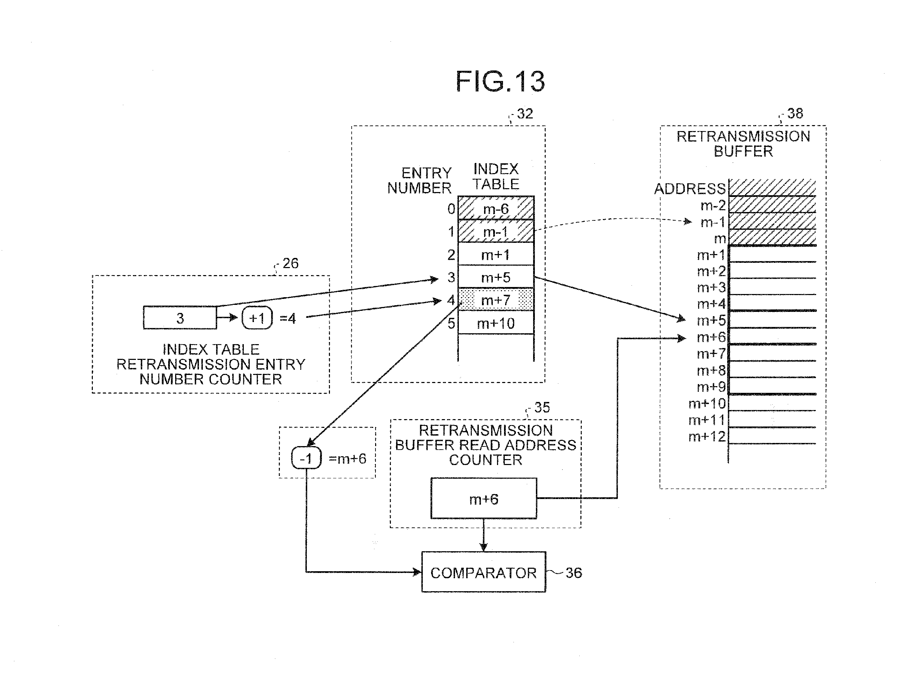

In the following, a specific example of a process for determining the end of a packet will be described with reference to FIG. 13. FIG. 13 is a schematic diagram illustrating a process for determining the end of the packet. In the example illustrated in FIG. 13, it is assumed that the index table 32 and the retransmission buffer 38 stores therein the same packet as that illustrated in the example in FIG. 11.

For example, the index table retransmission entry number counter 26 stores therein the value "3" of the entry number. Consequently, the adder 27 outputs the entry number "4". Because, in the index table 32, the index address stored in the entry of the entry number "4" that was output by the adder 27 is "m+7", the comparator 36 recognizes the value "m+6", which is a value obtained by subtracting 1 from "m+7". Then, if the value retained in the retransmission buffer read address counter 35 becomes "m+6", the comparator 36 determines that the line in the retransmission buffer 38 that is being read is the end of a packet.

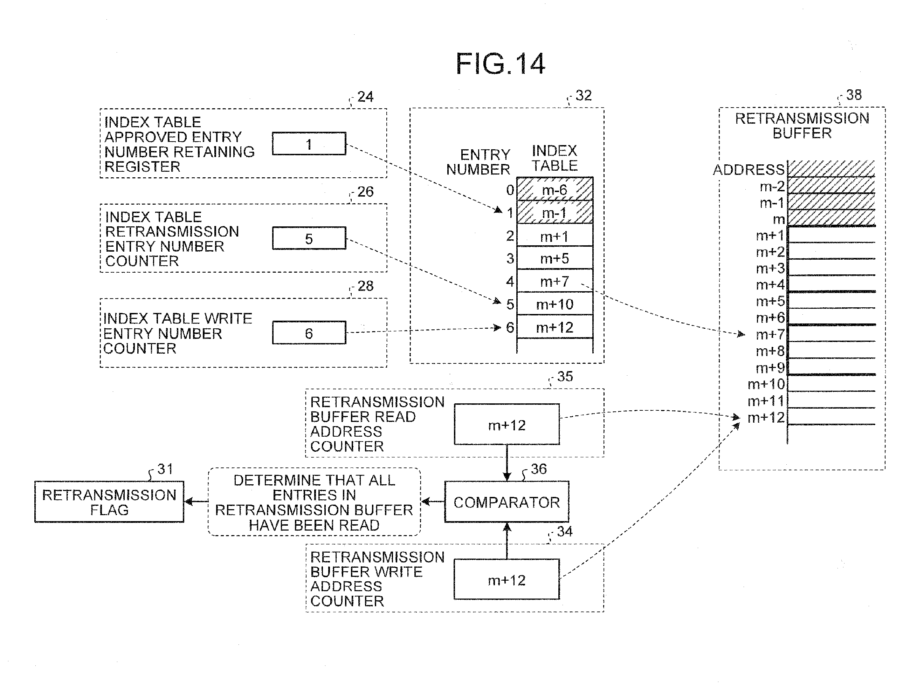

In the following, a specific example of a process for determining whether the retransmission process has ended will be described with reference to FIG. 14. FIG. 14 is a schematic diagram illustrating a process for determining whether a retransmission process has ended. In the example illustrated in FIG. 14, it is assumed that the index table 32 and the retransmission buffer 38 stores therein the same packet as that illustrated in FIG. 13.

Furthermore, it is assumed that the index table write entry number counter 28 retains the entry number "6". Furthermore, it is assumed that the index table approved entry number retaining register 24 retains the entry number "1". Furthermore, it is assumed that, because retransmission of a packet is performed starting from the index address "m+1" that is stored in the entry number "2", the index table retransmission entry number counter 26 stores therein "5".

In such a case, the retransmission buffer read address counter 35 compares the value retained in the retransmission buffer read address counter 35 with the value retained in the retransmission buffer write address counter 34. In the example illustrated in FIG. 14, because the packets to be retransmitted are sequentially read, the value retained in the retransmission buffer read address counter 35 becomes "m+12".

Then, the comparator 36 determines that the value retained in the retransmission buffer read address counter 35 matches the value "m+12" retained in the retransmission buffer write address counter 34. Consequently, the comparator 36 determines that all of the entries in the retransmission buffer have been read and thus resets the retransmission flag 31 to "Low".

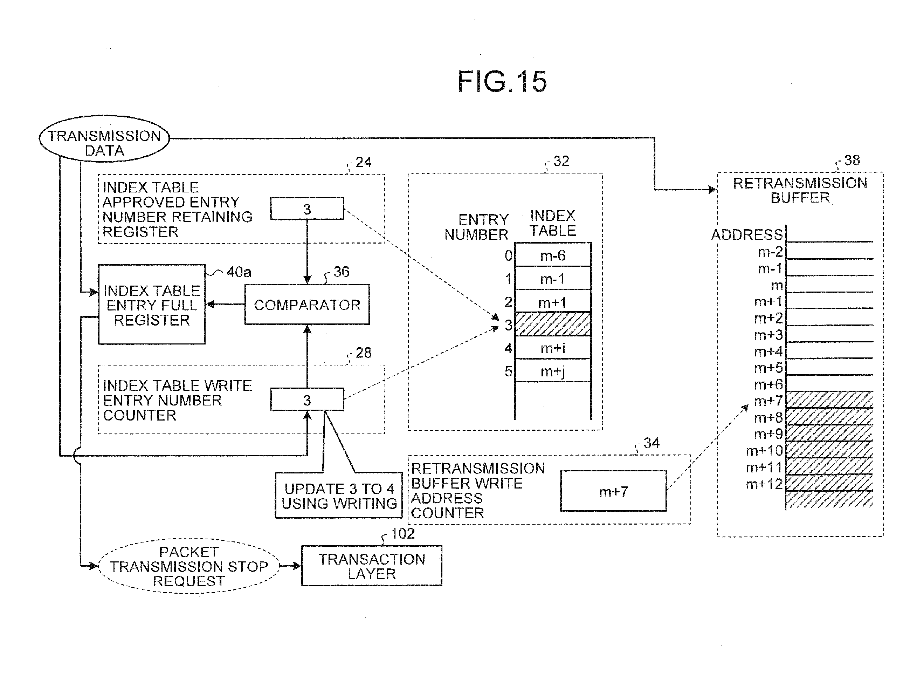

In the following, a specific example of a process for determining whether an index table is full will be described with reference to FIG. 15. FIG. 15 is a schematic diagram illustrating a process for determining whether the index table is full. In the example illustrated in FIG. 15, it is assumed that, in the index table 32, only the entry of the entry number "3" is empty.

For example, the comparator 36 compares the entry number retained in the index table approved entry number retaining register 24 with the index table write entry number counter 28. In the example illustrated in FIG. 15, the comparator 36 determines that the entry numbers to be compared are "3", i.e., they are a match. If a new transmission packet is output from the transaction layer 102 and if the data link layer 103 receives the packet, the comparator 36 notifies, by storing "High" in the index table entry full register 40a, the transaction layer 102 that the index table 32 is full.

Furthermore, in the example illustrated in FIG. 15, a new transmission packet output from the transaction layer 102 is sequentially stored starting from the index address "m+7" indicated by the retransmission buffer write address counter 34 from among the lines included in the retransmission buffer 38. Consequently, the index table 32 stores the index address "m+7" in the entry of the entry number "3".

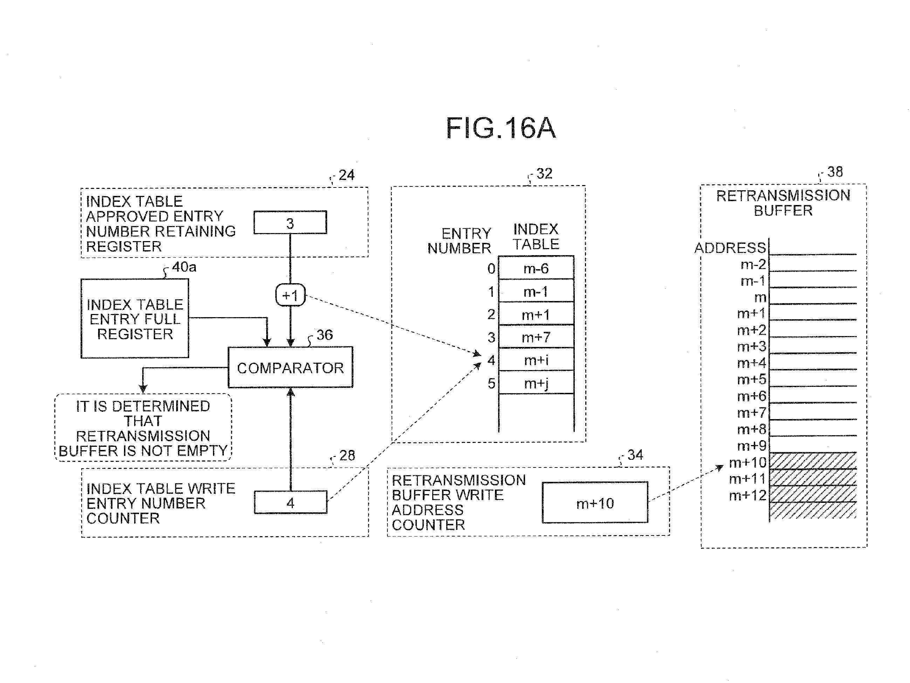

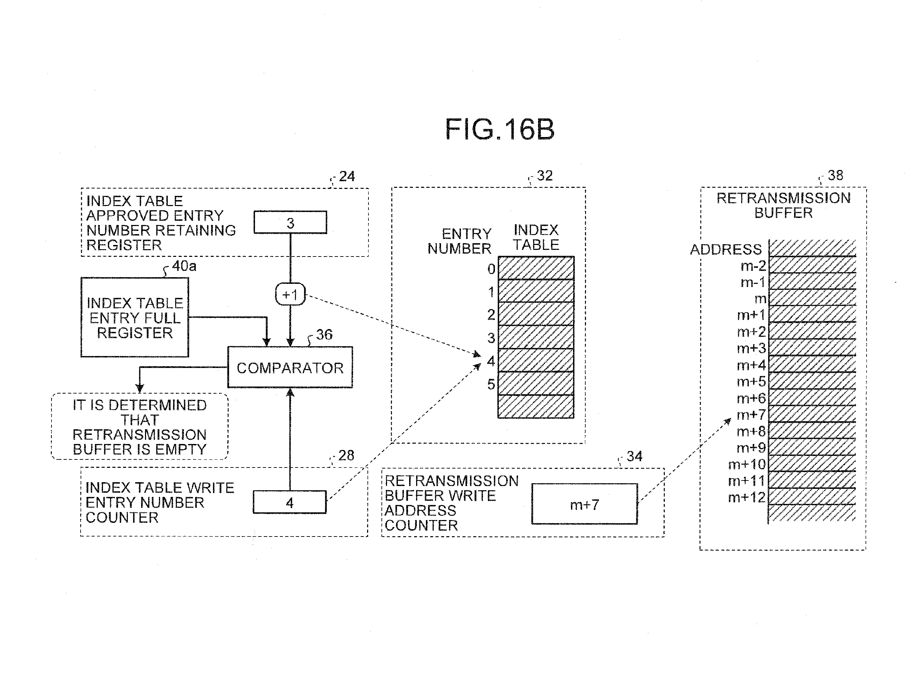

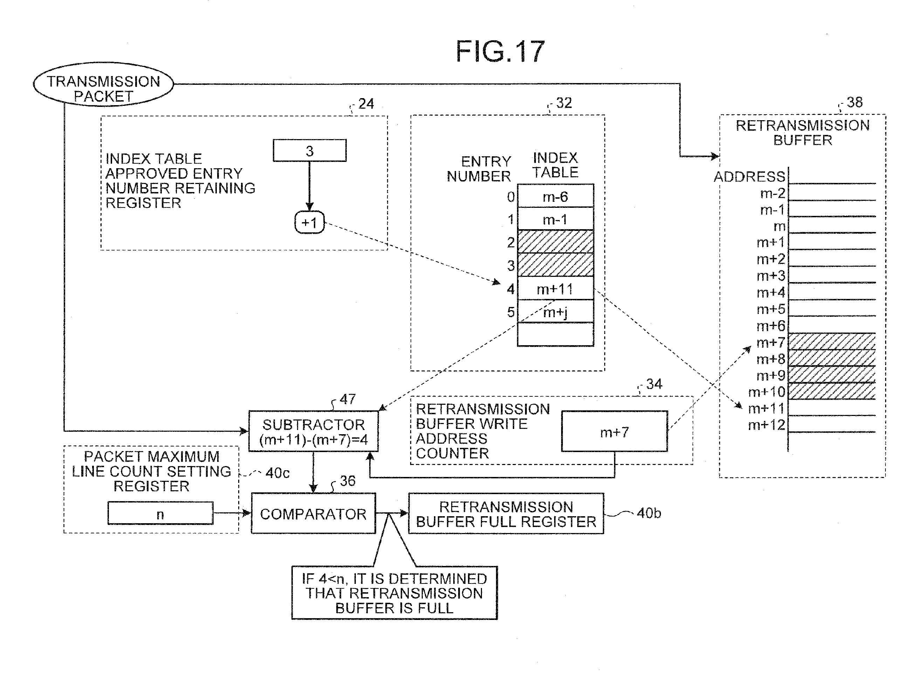

In the following, the flow of a process for determining whether the retransmission buffer 38 is empty or full will be described with reference to FIGS. 16A, 16B, and 17. For example, to determine whether the retransmission buffer 38 is empty or full, the data link layer 103 uses an entry number retained in the index table approved entry number retaining register 24 and an entry number retained in the index table write entry number counter 28.

For example, if the index table 32 is full or if the index table 32 is empty, i.e., if the retransmission buffer 38 is empty, the value obtained by adding 1 to the entry number retained in the index table approved entry number retaining register 24 matches the corresponding entry number retained in the index table write entry number counter 28. At this point, if the index table entry full register 40a does not indicate "High", it means that the index table 32 is not full, i.e., the retransmission buffer 38 is empty.

FIG. 16A is a schematic diagram illustrating a state in which a retransmission buffer is not empty. In the example illustrated in FIG. 16A, the comparator 36 determines whether the value obtained by adding 1 to the entry number retained in the index table approved entry number retaining register 24 matches the corresponding entry number retained in the index table write entry number counter 28.

In the example illustrated in FIG. 16A, the comparator 36 determines that the entry numbers are "4", i.e., they match. Then, the comparator 36 determines whether "High" is stored in the index table entry full register 40a. In the example illustrated in FIG. 16A, because index tables are stored in all of the entries in the index table 32, "High" is stored in the index table entry full register 40a. Consequently, the comparator 36 determines that the retransmission buffer is not empty.

Furthermore, FIG. 16B is a schematic diagram illustrating a state in which the retransmission buffer is empty. As illustrated by the oblique lines in FIG. 16B, a valid packet is not stored in the retransmission buffer 38 and thus a valid packet is also not stored in the index table 32. However, also in the example illustrated in FIG. 16B, the value obtained by adding 1 to the value retained in the index table approved entry number retaining register 24 matches the value retained in the index table write entry number counter 28.

Accordingly, if the comparator 36 determines that the entry numbers match, the comparator 36 then determines whether "High" is stored in the index table entry full register 40a. Here, in the example illustrated in FIG. 16B, because the index table 32 is empty, the process illustrated in FIG. 15 is not performed at the immediately previous step.

Consequently, in the example illustrated in FIG. 16B, "Low" is stored in the index table entry full register 40a. Thus, the comparator 36 determines that the retransmission buffer is empty and, furthermore, determines that the index table 32 is also empty.

In the following, the flow of a process for determining whether a retransmission buffer is full will be described with reference to FIG. 17. FIG. 17 is a schematic diagram illustrating a process for determining whether the retransmission buffer is full. In the example illustrated in FIG. 17, it is assumed that the index table approved entry number retaining register 24 stores therein the value "3" and it is assumed that the retransmission buffer write address counter 34 stores therein "m+7". Furthermore, it is assumed that the packet maximum line count setting register 40c stores therein the value "n".

For example, if the transaction layer 102 receives the end of a packet, the subtractor 47 performs the following process. First, the subtractor 47 identifies the entry number "4" that is obtained by adding 1 to the value "3" retained in the index table approved entry number retaining register 24. Then, the subtractor 47 acquires, from the entries in the index table 32, the index address "m+11" stored in the entry indicated by the identified entry number "4".

Furthermore, the subtractor 47 acquires the index address "m+7" that is stored in the retransmission buffer write address counter. Then, the subtractor 47 outputs, to the comparator 36, the value "4" obtained by subtracting the index address "m+7" acquired from the retransmission buffer write address counter 34 from the index address "m+11" acquired from the index table 32.

Then, the comparator 36 compares the value "4" received from the subtractor 47 with the value "n" stored in the packet maximum line count setting register 40c. If the value "n" stored in the packet maximum line count setting register 40c is greater than the value "4" received from the subtractor 47, the comparator 36 determines that the retransmission buffer is full and then sets the retransmission buffer full register 40b to "High".

As described above, the data link layer 103 counts the remaining number of lines in the retransmission buffer 38 by using the index address in which the top of the packet to be immediately subsequently retransmitted is stored and by using the index addresses stored in the retransmission buffer write address counter 34. If the remaining number of lines is less than the number of maximum lines when a packet is stored, the data link layer 103 requests the transaction layer 102 to stop the data transmission. Consequently, the data link layer 103 can prevent overflow in the retransmission buffer 38. In practice, the data link layer in the PCIe has a function that is not described here, such as a data protection function performed using the LCRC; however, a description thereof has been omitted.

[Advantage of the first embodiment] As described above, the component 101 includes the retransmission buffer 38 and the index table 32. Furthermore, the component 101 includes the index table write entry number counter 28 that retains therein and updates an entry number used when the index table 32 stores therein a new index address. Furthermore, the component 101 includes the index table approved entry number retaining register 24 that retains therein and updates an entry number used for reading, from the index table 32, an index of a packet to be retransmitted.

Furthermore, the component 101 includes the approved sequence number retaining register 22 that retains therein approved sequence numbers of a packet for which an Ack is received from the component 105. Then, on the basis of the newly received approved sequence number and the sequence numbers stored in the approved sequence number retaining register 22, the component 101 updates the value retained in the index table approved entry number retaining register 24.

Consequently, if the lengths of packets in lines to be retransmitted vary, the component 101 can attach the same sequence numbers as those used at the transmission to the packets to be retransmitted without retaining all of the sequence numbers. Thus, the component 101 can reduce the storage capacity needed to perform the retransmission process.

Furthermore, the component 101 determines the number of packets correctly received by the component 105 on the basis of the difference between the approved sequence number retained in the approved sequence number retaining register 22 and the newly received approved sequence number. Then, the component 101 adds the determined value to the value of the entry number retained in the index table approved entry number retaining register 24. Consequently, the component 101 can identify the top of each packet stored in the retransmission buffer 38 without storing, in an associated manner, the sequence numbers and the index addresses in which the top of the packet to be retransmitted is stored.

Furthermore, if a Nak is received, the retransmission buffer read address counter 35 acquires an index address from an entry indicated by the entry number that is obtained by adding 1 to the entry number retained in the index table approved entry number retaining register 24. Then, the retransmission buffer read address counter 35 reads the packets in the retransmission buffer 38 starting from the acquired index address. Then, the packet selector 39 transmits the read packets to the component 105. Consequently, the component 101 can transmit, to the component 105, the packet to be retransmitted without increasing the storage capacity.

The comparator 36 acquires an index address stored in an entry indicated by the entry number that is obtained by adding 1 to the entry number retained in the index table retransmission entry number counter 26. Furthermore, the comparator 36 determines whether the acquired index address matches the index address retained in the retransmission buffer read address counter 35.

If the acquired index address matches the index address retained in the retransmission buffer read address counter 35, the packet selector 39 transmits the packet read from the matched index address as a new packet. Specifically, the packet selector 39 transmits the packet as a packet that is different from that immediately previously transmitted. Consequently, even if the lengths of packets vary, the component 101 can transmit the packets as different packets to the component 105.

Furthermore, if the acquired index address matches the index address retained in the retransmission buffer read address counter 35, the index table retransmission entry number counter 26 updates the retained entry number. Consequently, even if the component 101 sequentially retransmits multiple packets, the component 101 can correctly identify the top of each packet and transmits the packets as packets that are different packets from each other to the component 105.

Furthermore, if the retransmission timer 30 does not receive either an Ack or a Nak in a predetermined time period, the retransmission timer 30 sets the retransmission reservation flag 29 to "High". Consequently, if the retransmission flag 31 becomes "High", the retransmission buffer read address counter 35 acquires, from the index table 32, the index address in which the top of the packet to be retransmitted is stored. Consequently, even if a time-out occurs, the component 101 can start the retransmission process.

Furthermore, when the retransmission sequence number counter 37 starts the retransmission process, the retransmission sequence number counter 37 retains, as an initial value, a value obtained by adding 1 to the approved sequence number retained in the approved sequence number retaining register 22. Then, the packet selector 39 attaches the value retained in the retransmission sequence number counter 37 to the packet to be retransmitted as the sequence number for retransmission. Consequently, without storing the packet to be retransmitted and the sequence number in an associated manner, the component 101 can retransmit the packet to the component 105 by re-allocating the same transmission sequence number as that allocated to the packet to be retransmitted when the packet was transmitted first time.

Furthermore, the data link layer 103 includes the retransmission buffer 38 that temporarily stores therein packets of different lengths. Furthermore, the data link layer 103 includes the retransmission buffer write address counter 34 that indicates the location in the retransmission buffer 38 in which a new packet is registered if a new packet is created. Furthermore, the data link layer 103 includes the index table 32 constituted by entries that store therein the top location of the packet stored in the retransmission buffer 38. Consequently, the data link layer 103 can retransmit data by using a small amount of storage resources.

Furthermore, the data link layer 103 includes the index table write entry number counter 28 that indicates the entry location in the index table 32 in which the top location of the packet is registered if a new packet is create. Furthermore, the data link layer 103 includes the index table retransmission entry number counter 26 that indicates a readable entry in the index table 32. Consequently, the data link layer 103 can retransmit data while using a small amount of storage resources.

Furthermore, the data link layer 103 includes the approved sequence number retaining register 22 that retains an approved sequence number given to a response packet transmitted from the destination of a packet. Furthermore, by using both a first approved sequence number retained in the approved sequence number retaining register 22 and a second approved sequence number given to the immediately subsequently received response packet, the data link layer 103 counts the number of packets that is received by the destination of the packet normally and then updates the index table approved entry number retaining register 24. Consequently, the data link layer 103 can retransmit data while using a small amount of storage resources.

Furthermore, the data link layer 103 includes the packet selector 39 that retransmits multiple packets retained in the retransmission buffer 38 when it is determined that packet retransmitting is to be started. Consequently, the data link layer 103 can retransmit data.

The data link layer 103 identifies the top location stored in the entry indicated by the index table retransmission entry number counter 26, reads a packet registered in the retransmission buffer 38 from the identified top location, and retransmits the packet starting from the read packet. Consequently, the data link layer 103 can retransmit data.

The data link layer 103 attaches a sequence number to a packet and receives an Ack or a Nak in which the attached sequence number is attached to the destination of the packet as an approved sequence number. Consequently, the data link layer 103 can appropriately identify a retransmission sequence number.

The data link layer 103 includes the retransmission buffer read address counter 35 that indicates the read location, in the retransmission buffer 38, for transmitting a packet. Furthermore, the data link layer 103 includes the index table retransmission entry number counter 26 that indicates the location of an entry that stores therein the top location of a packet that is being retransmitted and that is in the index table 32. Furthermore, the data link layer 103 includes the comparator 36 that detects the top location of a packet by comparing a first index address stored in the entry that is next to the entry indicated by the index table retransmission entry number counter 26 with a second index address indicated by the retransmission buffer read address counter 35. Consequently, the data link layer 103 can read, one by one, packets from the retransmission buffer 38.

The data link layer 103 updates the sequence number to be attached to a packet every time the top location of a packet is detected during a retransmission process. Consequently, the data link layer 103 can attach the correct retransmission sequence number to a packet to be retransmitted.

### [b] Second Embodiment

In the following, a device according to a second embodiment will be described. To reduce the amount of packets to be retransmitted, if either an Ack or a Nak is received during retransmission, for a packet that will be retransmitted, the device according to the second embodiment does not retransmit a packet that has already been approved by the destination device (hereinafter, this process is referred to as a "skip") but continues to retransmit a packet from the packet subsequent to the packet that has already been approved by the destination device. In the description below, the device according to the second embodiment includes a data link layer 103a that is the same as the data link layer 103 included in the component 101.

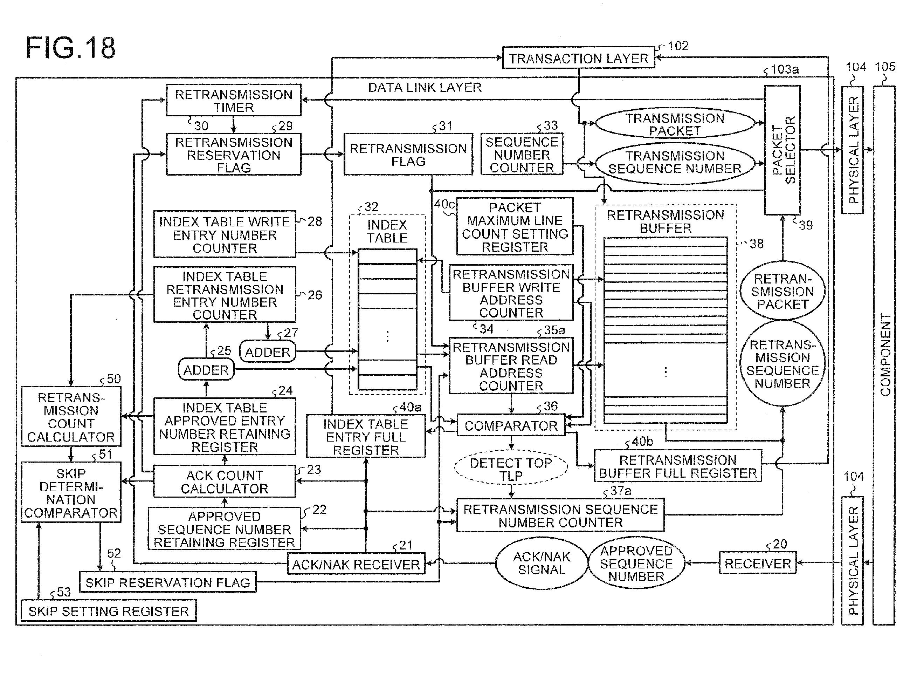

In the following, the functional configuration of the data link layer 103a will be described with reference to FIG. 18. FIG. 18 is a schematic diagram illustrating the functional configuration of a data link layer according to a second embodiment. In the example illustrated in FIG. 18, components having the same functions as those in the data link layer 103 illustrated in FIG. 2 are assigned the same reference numerals illustrated in FIG. 2; therefore, a description thereof is omitted.

As illustrated in FIG. 18, the data link layer 103a includes a retransmission buffer read address counter 35a, a retransmission sequence number counter 37a, a retransmission count calculator 50, a skip determination comparator 51, a skip reservation flag 52, and a skip setting register 53. The retransmission count calculator 50 acquires an entry number retained in the index table retransmission entry number counter 26 and acquires an entry number retained in the index table approved entry number retaining register 24. Then, the retransmission count calculator 50 calculates the number of retransmitted packets by calculating the difference between the acquired entry numbers and then outputs the calculated results to the skip determination comparator 51.

If the flag indicating the skip setting register 53 skips is retained, the skip determination comparator 51 performs the following process. First, the skip determination comparator 51 receives the number of retransmitted packets from the retransmission count calculator 50. Furthermore, the skip determination comparator 51 receives the number of newly approved packets from the Ack count calculator 23.

If the number of newly approved packets is greater than the number of retransmitted packets, the skip determination comparator 51 determines that a packet that does not need to be retransmitted is present. Thereafter, if the skip determination comparator 51 determines that a packet that does not need to be retransmitted is present, the skip determination comparator 51 stores "High" in the skip reservation flag 52.

The skip reservation flag 52 is a flag that instructs a skip to be executed. If "High" is stored in the skip reservation flag 52, this instructs the retransmission buffer read address counter 35a to skip. The skip setting register 53 is a register that stores therein a flag used for setting whether a skip that is set by a user is executed.

In the following, a process performed by the retransmission buffer read address counter 35a when "High" is set in the skip reservation flag 52 will be described. The retransmission buffer read address counter 35a can perform the same function as that performed by the retransmission buffer read address counter 35 according to the first embodiment.

If "High" is set in the skip reservation flag 52, the retransmission buffer read address counter 35a performs the following process. First, the retransmission buffer read address counter 35a identifies the end of a packet by using the process illustrated in FIG. 13. Then, if the retransmission buffer read address counter 35a identifies the end of the packet, the retransmission buffer read address counter 35a acquires an index address stored in an entry with an entry number that is output from the adder 25 and then retains the acquired index address. Then, the retransmission buffer read address counter 35a continues to read the packet from the newly retained index address.

If the retransmission sequence number counter 37a identifies the end of a packet when "High" is set in the skip reservation flag 52, the retransmission sequence number counter 37a newly retains a value obtained by adding 1 to the sequence number retained in the approved sequence number retaining register 22. Consequently, the retransmission sequence number counter 37a correctly attaches a sequence number used for retransmission to the packet that is to be retransmitted after the skip.

As described above, if the component 101 receives a new approved sequence number when a packet is being retransmitted, the component 101 skips, after outputting the end of the packet that is being retransmitted, retransmission of the packets between a packet that is to be immediately subsequently retransmitted and a packet that has been approved with the new approved sequence number. Then, the component 101 starts the retransmission of the packet that is going to be retransmitted immediately subsequent to the newly approved packet.

Furthermore, even when skipping the retransmission of the packet, the component 101 can also determine whether the retransmission process of a packet has ended by performing the process illustrated in FIG. 14. Furthermore, even when skipping retransmission of all of the packet remaining in the retransmission buffer 38, the component 101 can also determine that the retransmission of a packet has ended. Specifically, if the component 101 determines that the retransmission of a packet has ended by performing the process illustrated in FIG. 14, the comparator 36 resets the retransmission flag 31 and resets the skip reservation flag 52 to "Low".

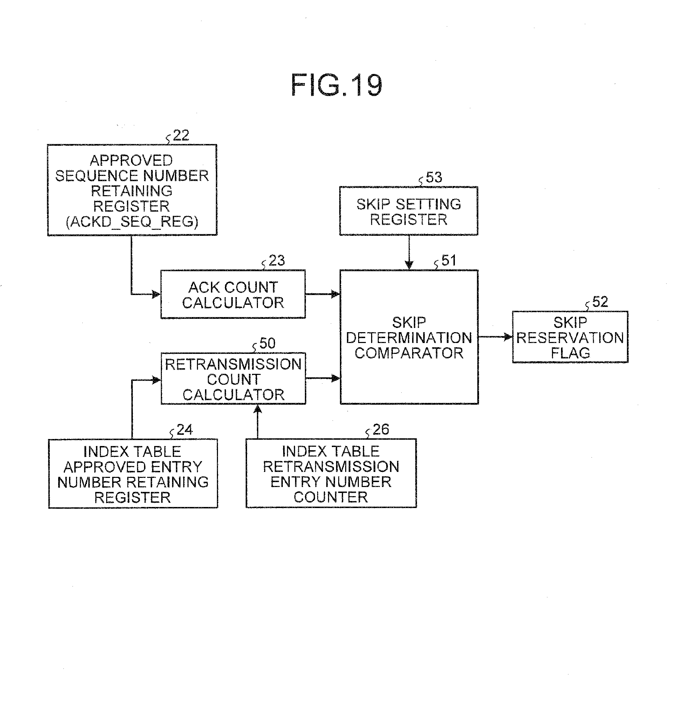

In the following, the flow of a process for setting a skip reservation flag will be described with reference to FIG. 19. FIG. 19 is a schematic diagram illustrating a process for setting a skip reservation flag. First, the retransmission count calculator 50 acquires an approved entry number from the index table approved entry number retaining register 24 and acquires an entry number from the index table retransmission entry number counter 26. Then, the retransmission count calculator 50 outputs, to the skip determination comparator 51, a value obtained by subtracting the entry number in the index table retransmission entry number counter 26 from the entry number acquired from the index table approved entry number retaining register 24.

The Ack count calculator 23 outputs, to the skip determination comparator 51, a value obtained by subtracting a sequence number retained in the approved sequence number retaining register 22 from the newly received approved sequence number. If "High" is set in the skip setting register 53, the skip determination comparator 51 determines whether the value received from the retransmission count calculator 50 is smaller than the value received from the Ack count calculator 23.

If "High" is stored in the skip setting register 53 and if the skip determination comparator 51 determines that the value received from the retransmission count calculator 50 is smaller than the value received from the Ack count calculator 23, the skip determination comparator 51 sets the skip reservation flag 52 to "High". Consequently, the component 101 skips the retransmission of the newly approved packet.

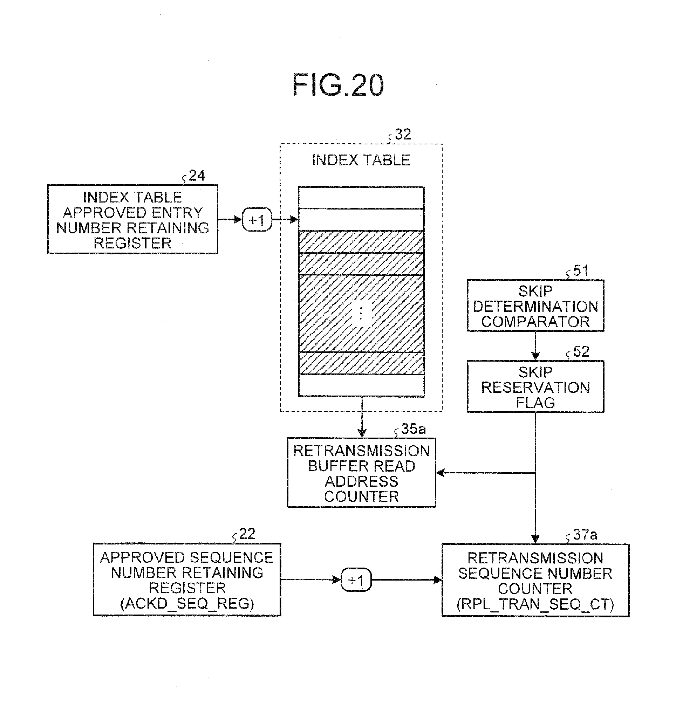

In the following, a process for setting a new value in the retransmission buffer read address counter 35a when retransmission of a packet is skipped will be described with reference to FIG. 20. FIG. 20 is a schematic diagram illustrating a process for setting a value used when a skip is performed. As illustrated in FIG. 20, if the skip determination comparator 51 determines that a skip is performed, the skip determination comparator 51 sets the skip reservation flag 52 to "High".

Then, when a skip is performed, the retransmission buffer read address counter 35a acquires a new index address from the entry indicated by the entry number that is obtained by adding 1 to the entry number retained in the index table approved entry number retaining register 24. Consequently, the component 101 can skip the retransmission of a packet that has already been received by the component 105.

Furthermore, if "High" is set in the skip reservation flag 52, the retransmission sequence number counter 37a newly retains, when a skip is performed, a sequence number obtained by adding 1 to the sequence number that is retained in the approved sequence number retaining register 22. Consequently, the component 101 can attach a correct sequence number to the packet that will be retransmitted after the skip.

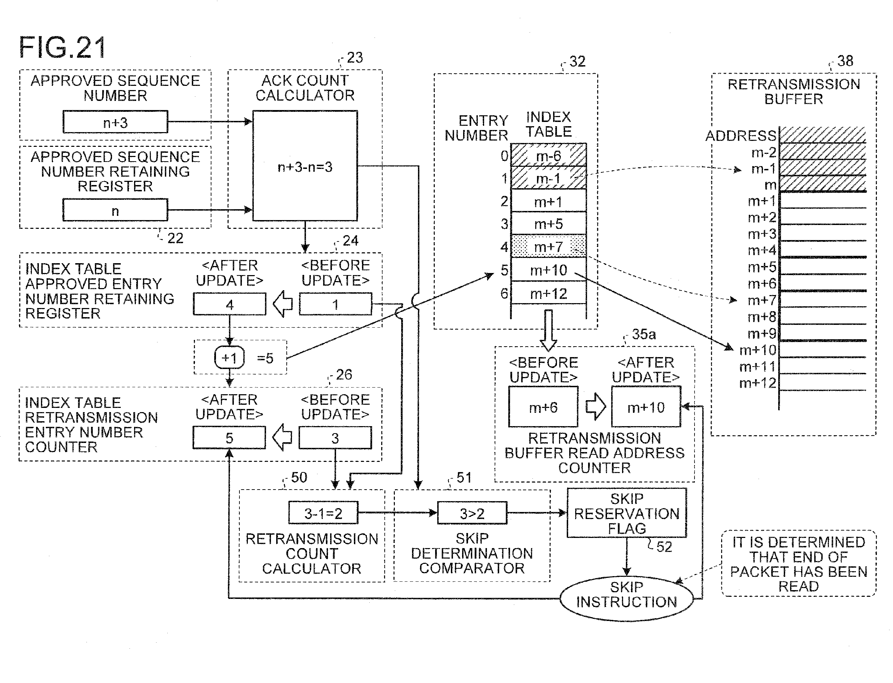

In the following, a specific example of a process for performing a skip will be described with reference to FIG. 21. FIG. 21 is a schematic diagram illustrating the flow of a process for performing a skip. In the example illustrated in FIG. 21, it is assumed that the index table 32 stores therein the same index address as that illustrated in FIG. 13 and assumed that the retransmission buffer 38 stores therein the same packet as that illustrated in FIG. 13.

Furthermore, it is assumed that the index table approved entry number retaining register 24 retains the entry number "1" and assumed that the index table retransmission entry number counter 26 retains the entry number "3". Furthermore, it is assumed that the component 101 sequentially retransmits packets starting from the packet for which the top is stored in the index address "m+1" and receives a new approved sequence number "n+3" when the component 101 is retransmitting a packet stored in the index address "m+5".

In such a case, the Ack count calculator 23 outputs "3", which is the difference between the approved sequence number retained in the approved sequence number retaining register 22 and the newly received approved sequence number.

The retransmission count calculator 50 subtracts the entry number "1" retained in the index table approved entry number retaining register 24 from the entry number "3" retained in the index table retransmission entry number counter 26. Then, the retransmission count calculator 50 outputs "2", which is the result of its calculation, to the skip determination comparator 51.

Because the value "3" that is output from the Ack count calculator 23 is greater than the value "2" that is output from the retransmission count calculator 50, the skip determination comparator 51 sets the skip reservation flag 52 to "High". Specifically, a packet associated with the entry number "2" was retransmitted for the period of time between the previous approval and the current time, a packet associated with the entry number "3" is currently being retransmitted, and a packet associated with the entry number "4" was going to be retransmitted; however, because the approved sequence numbers indicate that the packets associated with the entry numbers "2", "3", and "4" have been approved, there is no need to retransmit the packet associated with the entry number "4" in future. Specifically, if the number of approved packets is greater than the number of retransmitted packets, skipping of retransmission is an efficient way to reduce the amount of retransmission and to eliminate a waste.

After the index table approved entry number retaining register 24 outputs the value retained in the retransmission count calculator 50, it outputs, as usual, an output from the Ack count calculator 23 and performs an update. Consequently, the index table approved entry number retaining register 24 retains the entry number "4".

Furthermore, similarly to FIG. 13, the end of a packet is identified. When the skip reservation flag 52 is set to "High", if the retransmission buffer read address counter 35a counts up to the index address "m+6" in which the end of the packet that is being read is stored and if the comparator 36 determines that the reading of the end of the packet associated with the entry number "3" has ended, the component 101 performs a skip process. By performing the skip process, the index table approved entry number retaining register 24 outputs the updated value "4" to the adder 25. Consequently, the index table retransmission entry number counter 26 retains the entry number "5". Furthermore, due to the skip process, the retransmission buffer read address counter 35a newly acquires the index address "m+10" that is stored in an entry with the entry number obtained by adding 1 to the entry number retained in the index table approved entry number retaining register 24.

Specifically, the retransmission buffer read address counter 35a acquires the index address stored in the entry of the entry number that is output by the adder 25. Consequently, the component 101 skips retransmission of the packets stored in the index addresses "m+7" to "m+9" out of the packets stored in the retransmission buffer 38.

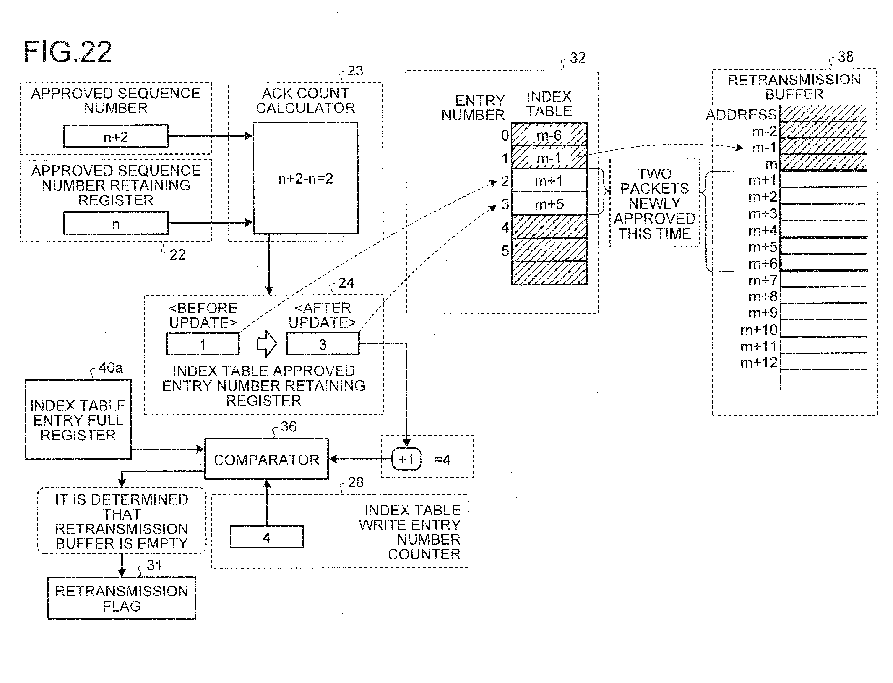

In the following, a specific example of a process, performed at the time of a skip, for determining whether retransmission has ended will be described with reference to FIG. 22. Specifically, the process mentioned here is a process performed in a case in which, when all of the remaining packets have been approved during retransmission, a skip is performed and thus there is no need to continue the retransmission. FIG. 22 is a schematic diagram illustrating a process, performed at the time of a skip, for determining whether retransmission has ended. For example, the Ack count calculator 23 calculates a difference of "2" between the newly approved sequence number "n+2" and the sequence number "n" retained in the approved sequence number retaining register 22. Consequently, the index table approved entry number retaining register 24 updates the retained entry number "1" to the entry number "3".

Then, the comparator 36 determines that the entry number "4" retained in the index table write entry number counter 28 matches the value that is obtained by adding 1 to the entry number retained in the index table approved entry number retaining register 24. Then, the comparator 36 determines whether "High" is set in the index table entry full register 40a. If "High" is not set in the index table entry full register 40a, the comparator 36 determines that the index table 32 is empty and thus determines that the retransmission buffer 38 is also empty. If the retransmission buffer 38 becomes empty, there is no need to continue retransmission thereafter. The comparator 36 resets the retransmission flag 31 to "Low" and ends the process.

### [Advantage of the second embodiment]

As described above, the retransmission count calculator 50 calculates the number of packets retransmitted to the component 105 from the entry numbers retained in the index table retransmission entry number counter 26 and the index table approved entry number retaining register 24. The skip determination comparator 51 compares the number of packets calculated by the retransmission count calculator 50 with that calculated by the Ack count calculator 23, i.e., the number of packets that are newly and normally received by the component 105.

If the number of packets calculated by the retransmission count calculator 50 is less than that calculated by the Ack count calculator 23, the skip determination comparator 51 reserves a skip by setting the skip reservation flag 52 to "High". If the reading of the end of a packet that is currently being retransmitted is completed in a state in which a skip is reserved, there is an instruction made to skip the packet. If there is an instruction made to skip the packet, the retransmission buffer read address counter 35a newly acquires an index address from an entry with the entry number that is output from the adder 25 and then retains the acquired index address. Furthermore, the index table retransmission entry number counter 26 newly acquires the entry number that is output from the adder 25 and then retains it.

Consequently, the component 101 skips the retransmission of the packet that is normally received by the component 105 and starts transmission of the packet that has not been approved by the component 105, thus reducing retransmission.

Furthermore, if the data link layer 103a receives an Ack during the retransmission process and if the number of retransmitted packets is greater than that of the packets normally received by the destination of a packet, the data link layer 103a stops the retransmission process after transmitting the packet that is being subjected to the retransmission process. Then, the data link layer 103a newly identifies an index address stored in an entry that is indicated by the index table approved entry number retaining register 24 that has been updated by the Ack count calculator 23 and then restarts the retransmission of the packet that is registered in the newly identified index address. Consequently, the data link layer 103a can perform a skip process.

### [c] Third Embodiment

In the above explanation, a description has been given of the embodiments according to the present invention; however, the embodiments are not limited thereto and can be implemented with various kinds of embodiments other than the embodiment described above. Therefore, another embodiment will be described as a third embodiment below.

### (1) About index the addresses and the sequence numbers

In the first and the second embodiments described above, a description has been given of a specific example of the index addresses stored in the index table 32 and a description has been given of a specific example of the sequence numbers; however, the specific examples described above are only examples and thus an arbitrary format or value may also be used. For example, an arbitrary number of digits or n-adic number may also be used for the index addresses and the sequence numbers.

### (2) About packets to be transmitted

In the first and the second embodiments described above, a description has been given of an example of storing a packet in the retransmission buffer 38 and of storing a packet and a sequence number in the packet by using the packet selector 39; however, the embodiments are not limited thereto. For example, the retransmission buffer 38 may also store a packet created by the transaction layer 102 and the packet selector 39 may also store a sequence number in a packet to be transmitted and output the packet.

### (3) About the embodiments

The index table approved entry number retaining register 24 described above may also include the function performed by the adder 25. Furthermore, the index table retransmission entry number counter 26 may also include the function performed by the adder 27.

Furthermore, the configuration of the information processing apparatus 1 illustrated in FIG. 1A is only an example. The information processing apparatus 1 may also include an arbitrary number of CPUs or memories. Furthermore, the PCIe end point in the information processing apparatus 1 may also be a PCIe switch. The PCIe switch may also be arranged on the same node in which the PCIe root complex is arranged. Furthermore, a device constituted by a PCIe switch and a PCIe end point may also be used. Furthermore, a device constituted by a PCIe switch and a PCIe switch may also be used. For example, like the packet transmission from the end point to the root complex, the transmission side and the reception side may also be inversed. Furthermore, the device is not limited to the PCIe as long as the device has a retransmission function using the same sequence numbers as those used above. An example of such a device includes a device having the data link layer in the second layer of an Open Systems Interconnection (OSI) reference model, such as an universal serial bus (USB) 3.0.

According to an aspect of an embodiment, a retransmission process can be performed by using a small amount of information.

## Claims

1. A data transmission device (5) comprising:
a packet storing unit (38) that temporarily retains therein multiple data packets;
a top location instructing unit (34) that indicates a location in the packet storing unit (38) to retain a new created data packet; and
a location information storing unit (32) that has a plurality of entries storing therein a top location of the data packets stored in the data packet storing unit (38).

2. The data transmission device (5) according to claim 1, further comprising:
a write instructing unit (28) that instructs an entry of the location information storing unit (32) for storing the top location of a new data packet stored in the data packet storing unit (38); and
a read instructing unit (26) that instructs a readable entry in the location information storing unit (32).

3. The data transmission device (5) according to claim 2, wherein
the data transmission device (5) issues one or more data packets, and the data transmission device (5) further comprises:
a checked number storing unit (22) that retains therein sequence numbers given to response packets transmitted from a data receiving device that is a destination of the data packets; and
a calculation updating unit (23, 24) that calculates, by using a first sequence number retained in the checked number storing unit (22) and a second sequence number that is retained in the checked number storing unit (22) and that is given to a response packet that is immediately subsequently received after a response packet giving to the first sequence number, the number of the data packets normally received by the data receiving device and updates an instruction of the readable entry performed by the read instructing unit (26) on the basis of the result of the calculation.

4. The data transmission device (5) according to claim 3, further comprising a retransmission unit (36, 39) that retransmits, when it is determined that retransmission of the data packets is to be started, the data packets retained in the packet storing unit (38).

5. The data transmission device (5) according to claim 4, wherein the retransmission unit (36, 39) determines the top location stored in an entry in the location information storing unit (32) indicated by the read instructing unit (26), reads the data packets retained in the packet storing unit (38) starting from the determined top location sequentially, and retransmits the read data packets sequentially.

6. The data transmission device (5) according to claim 4, wherein
the retransmission unit (36, 39) attaches sequence numbers to each of the data packets, and
the data transmission device (5) further comprises a receiving unit that receives a response packet to which a sequence number same as the sequence number attached to a corresponding data packet is attached by the data receiving device.

7. The data transmission device (5) according to claim 6, further comprising:
a read location instructing unit (35) that instructs the read location for transmitting the data packets in the packet storing unit (38);
a retransmission location indicating unit (26) that indicates an entry storing therein the top location of the data packet retained in the location information storing unit (32) and currently being retransmitted by the retransmission unit (36, 39); and
a top location detecting unit (36) that detects the top location of a data packet to be immediately subsequently transmitted by comparing first location stored in an entry that is located immediately subsequent to the entry indicated by the retransmission location indicating unit (26) with second location indicated by the read location instructing unit (35).

8. The data transmission device (5) according to claim 7, wherein the retransmission unit (36, 39) updates the sequence numbers attached to the data packets when the top location detecting unit (36) detects the top location of a data packet during retransmitting the data packets by the retransmitting unit.

9. The data transmission device (5) according to claim 5, wherein, when the response packet is received from the data receiving device during retransmitting the data packets and a number of retransmitted data packets is greater than a number of the normally received data packets calculated by the calculation updating unit (23, 24), the retransmission unit (36, 39) stops retransmitting the data packets after retransmitting the data packet being currently retransmitted, newly determines a top location stored in an entry that is indicated by the read instructing unit (26) having updated by the calculation updating unit (23, 24), and resumes retransmitting the data packets registered in the packet storing unit (38) starting from a data packet at the newly determined top location.

10. A data transmission method performed by a data transmission device (5), the data transmission method comprising:
retaining multiple data packets in a packet storing unit (38) and
storing, in a location information storing unit (32), the location indicated by a top location instructing unit (34) that indicates the location of retaining a new data packet in the packet storing unit (38).
